# EUROPEAN PATENT SPECIFICATION

(11) **EP 2 906 857 B1**
(45) Date of publication and mention of the grant of the patent: **22.11.2017**
(21) Application number: 13845674.4
(22) Date of filing: 11.10.2013
(51) Int. Cl.: F16J 15/00, F16J 15/16, F16J 15/32, F16J 15/44

(54) **DYNAMIC BACKUP RING ASSEMBLY**
DYNAMISCHES SICHERUNGSRINGSYSTEM
ENSEMBLE BAGUE ANTI-EXTRUSION DYNAMIQUE

(30) Priority: 12.10.2012 US 201261795217 P; 14.12.2012 US 201261797747 P; 03.05.2013 US 201361854879 P
(43) Date of publication of application: 19.08.2015
(73) Proprietor: Kalsi Engineering, Inc., Sugar Land, TX 77478 (US)
(72) Inventor: RICHIE, Aaron Paul, Houston, Texas 77023 (US); DIETLE, Lannie L., Houston, Texas 77081 (US)
(74) Representative: Williams, Michael Ian
(86) International application number: PCT/US2013/064700
(87) International publication number: WO 2014/059375

(56) References cited:
- US-A1- 2011 127 725
- US-B1- 6 371 488
- US-B2- 8 083 235

## Description

### BACKGROUND OF THE INVENTION

### 1. Field of the Invention

The present invention is related to machinery having a relatively movable shaft, where a dynamic seal establishes sealing contact with the relatively movable shaft to retain a pressurized fluid. Examples of relatively movable shafts include shafts that have relative rotation with respect to the dynamic seal, shafts that have relative reciprocation with respect to the dynamic seal, and shafts that have both rotation and reciprocation relative to the dynamic seal. More particularly, the present invention is related to a backup ring that increases the ability of a dynamic seal to withstand high differential pressure while still allowing freedom of relative shaft movement.

### 2. Description of the Prior Art

Dynamic seals for high differential pressure service are often mounted in a housing, slide relative to a shaft, and provide a sealing function between the housing and the shaft. A high pressure dynamic seal requires a small shaft-to-housing extrusion gap clearance to avoid extrusion damage, yet the clearance must be large enough to avoid heavily loaded shaft-to-housing contact at the bore of the housing that defines the extrusion gap clearance. If heavily loaded shaft-to-housing contact occurs at the extrusion gap of a dynamic seal during relative rotation, the housing assumes the lateral load intended for the bearings. The resulting friction and heat can destroy the dynamic seal, and may damage the housing and the shaft sealing surface in ways that are highly detrimental to the effective life of the dynamic seal. Heavily loaded shaft-to-housing contact can also occur with reciprocating shafts due to misalignment related binding, and can lead to scoring and galling of the shaft sealing surface.

Some of the optimum conditions for high pressure extrusion resistance are:
- Small extrusion gap clearance.
- Avoidance of heavily loaded contact between the seal housing and shaft, particularly at the region of intended extrusion gap clearance.
- Minimal relative radial motion between the housing and the shaft to minimize dynamic changes to the size of the extrusion gap clearance.
- Minimal pressure induced deformation ("pressure breathing") of the extrusion gap clearance.
- An undamaged corner between the seal groove and the housing bore that defines the extrusion gap.

The implications of excessive shaft-to-housing extrusion gap clearance are:
1.) Pressure causes seal material to protrude into extrusion gap clearance.
2.) Runout and pressure breathing flex the protruding seal material.
3.) Cyclic strain destroys the protruding seal material.
4.) Pressure causes more protrusion.
5.) The damage cycle continues until sealing function is lost.

A number of factors prohibit a small extrusion gap clearance and precise shaft guidance in large machinery. Manufacturing tolerances are large, which directly affects the size of the shaft-to-housing clearance, and also increases bearing mounting and internal clearances, which all permit shaft run-out and misalignment. Large components are often subject to significant elastic deformation when exposed to high pressure and large mechanical loads.

Surface speeds can be significant in large diameter rotary equipment, which adds to seal-generated heat. This softens the seal material, and reduces seal extrusion resistance.

The present invention is directed at applications with relative rotation, relative reciprocation, or both. For the purpose of understanding prior art problems, one can study the annular rotary control devices (also known as rotary blowout preventers) shown by U.S. Pat. Nos. 5,588,491 and 5,662,171. These patents are titled "Rotating Blowout Preventer and Method." The devices represented by these patents expose a dynamic seal to relative rotation, relative reciprocation, and high differential pressure. Because these units have non-floating seal housings, stack alignment must be essentially perfect. However, there is much potential for misalignment between the lower shaft and the seal housing. The shaft for the lower dynamic seal is an extension of a large reciprocating piston that actuates the packer element. This large piston is necessarily mounted with enough clearance for sliding, which adds to its potential for misalignment. The piston is a two-piece assembly, which also adds to the potential for misalignment of the sealing surface. The piston is hydraulically thrust against the packer element to actuate the packer element. The packer element deforms in uneven fashion against a drillstring. The drillstring is in all likelihood misaligned with the rotating control device, and not running true. This imposes severe cocking loads on the reciprocating piston, causing misalignment and run-out that can cause heavily loaded contact at the extrusion gap that is likely to damage the dynamic seal, the shaft, and the seal housing.

As a general conclusion concerning large equipment such as rotary control devices, if clearance is in a useful range for extrusion resistance, it is virtually impossible to guide the shaft so precisely that it will not rub on the bore of a conventional non-floating seal housing. This rubbing creates seal-damaging heat, and may also damage the seal housing and shaft in ways that significantly accelerate rotary seal extrusion damage.

Internal fluid within a rotating control device is often pressurized for various reasons. One reason for internal fluid pressure is to actuate the packer element. Another reason for fluid pressure is to orient the dynamic seal that partitions the internal fluid from the drilling fluid.

The use of dynamic seals for establishing sealing between relatively movable machine components for fluid retention is known. The differential pressure that such dynamic seals can retain is limited by the extrusion resistance of the material used in the construction of the seal, and is also limited by the size of the extrusion gap clearance that exists between the seal housing and the mating relatively movable surface. In the case of dynamic seals designed to provide hydrodynamic interfacial lubrication in response to relative motion, the size of the extrusion gap clearance also influences interfacial lubrication. The backup rings used with static and reciprocating seals are unsuitable for rotary seals exposed to high differential pressure due to liabilities such as high friction, high wear, material flow, and damaging frictional heat.

U.S. Pat. No. 5,195,754, entitled "Laterally Translating Seal Carrier for a Drilling Mud Motor Sealed Bearing Assembly," and U.S. Pat. No. 6,227,547, entitled "High Pressure Rotary Shaft Sealing Mechanism" disclose axially force balanced seal carriers that follow the often unavoidable lateral motion of rotary shafts while maintaining a relatively small extrusion gap clearance between the seal carrier and the rotary shafts. The seal carriers of these patents require a step change in shaft diameter, and therefore cannot accommodate the significant shaft reciprocation found in some types of rotary equipment, such as the rotating control devices shown in U.S. Pat. Nos. 5,588,491 and 5,662,171. Another problem with the seal carriers of U.S. Pat. Nos. 5,195,754 and 6,227,547 is that seals and seal carriers of different diameters are typically required for pressure staging.

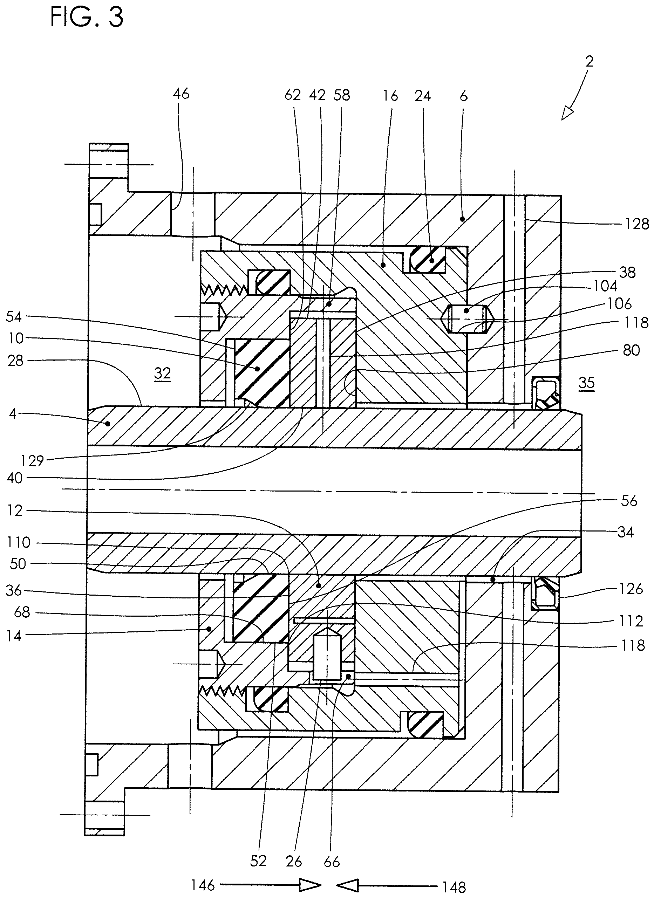

The seal carriers of U.S. Pat. Nos. 5,195,754 and 6,227,547 are subject to the coning problem that is shown in FIG. 3 of Chapter D16 Rev. 0 (April 23, 2012) of the Kalsi Seals Handbook, Rev. 6. Chapter D16 is titled "Axially force balanced, laterally translating arrangements," and describes the problem as follows: "The portion of a laterally translating high pressure seal carrier that is located between the Kalsi Seal and the face seal experiences a radial pressure imbalance that causes an inward deflection of the seal carrier. This deflection has to be taken into account when designing the journal bearing fit, the extrusion gap fit, and the axial fit of the seal carrier with the surrounding support structure." The problem with merely taking the deflection into account when designing the extrusion gap fit is that the extrusion gap closes as differential pressure builds, trapping extruded sealing material.

U.S. Pat. No. 6,007,105, entitled "Swivel Seal Assembly" provides pressure staging across a plurality of rotary seals engaging a relatively rotatable washpipe, and provides for simultaneous articulation of the washpipe and a surrounding seal housing to accommodate shaft run-out and misalignment. This simultaneous articulation is made possible by axial pressure balancing of both the washpipe and the seal housing. Because the seal housing expands due to internal pressure, the extrusion gap clearance changes as the sealed fluid pressure increases. Higher differential pressures could be withstood if the extrusion gap clearance could be held more constant.

US 2011/0127725 describes a dynamic sealing mechanism for a machine assembly that includes a seal housing of generally cylindrical form having opposed ends, the seal housing axially positioned between a pressure housing and a retaining member and laterally translatable relative to the pressure housing.

### SUMMARY OF THE INVENTION

According to the present invention there is provided a sealing assembly according to claim 1.

Preferred features of the present invention are recited in the dependent claims.

The present invention relates generally to dynamic seals used for establishing sealing between relatively movable machine components for separation of first and second fluids, and for retention of the first fluid, even when the pressure of the first fluid is considerably greater than the pressure of the second fluid. More specifically, the preferred embodiment is a mechanical arrangement that applies the pressures of the first and second fluids to controlled locations on a backup ring in order to provide substantial pressure balance in the radial direction, and if desired, substantially balanced force in the axial direction. The radial pressure balance makes the backup ring relatively immune to pressure-induced dimensional changes. The axial force balance frees the backup ring to align itself on the shaft and to follow lateral deflection and runout of the shaft. These benefits allow the backup ring to define a small initial extrusion gap for the dynamic seal, minimizing pressure-induced extrusion damage to the dynamic seal.

The invention is suitable for applications where in addition to lateral relative movement, axial and or rotational relative movement may be encountered. Oilfield rotating control devices, which are sometimes referred to as rotary blowout preventers, are an example of a dynamic sealing application where lateral relative motion is combined with rotary and axial relative motion. Oilfield washpipe assemblies are an example of a sealing application where lateral relative motion is combined with rotary relative motion.

The backup ring of a preferred embodiment is provided and configured so that neither differential pressure acting across the dynamic seal, nor ambient fluid pressure, causes the backup ring to significantly change diameter. This is achieved by having substantially the same pressure acting on both the outer and inner surfaces of the backup ring. The backup ring is preferably located between a shoulder of a retainer and an internal locating shoulder of a housing. This housing is sometimes referred to as a bulkhead housing. A spacer section is provided that has an axial length that is slightly longer than the captured axial length of the backup ring. For example, the spacer section could be a few thousandths of an inch longer than the backup ring. This spacer section spaces and separates the retainer shoulder from the housing locating shoulder so that the backup ring cannot be pinched between the retainer shoulder and the housing shoulder. By preventing pinching, the backup ring is free to move laterally in concert with any lateral motion of the shaft. The spacer section can be defined by the housing, or by the retainer, or can be defined by a separate ring-like component. The retainer is preferably retained in sealing engagement with the housing.

The pressure of the first fluid acts over a first hydraulic area between first inner and first outer sealing locations, and imparts a first axially-acting hydraulic thrust on the backup ring acting in a first hydraulic force direction. In a preferred embodiment, the first inner sealing site is established by the sealing engagement of the sealing material of the dynamic seal with respect to the relatively movable surface of the shaft (i.e., the sealing surface) in the vicinity of the radial clearance between the backup ring and the shaft. The first outer sealing site is established at the axial clearance between the retainer and the backup ring by sealing material. This sealing material may be provided either by the dynamic seal or by a separate face seal that is axially compressed between the retainer and the backup ring. This face seal preferably comprises resilient polymeric construction, so that pressure can transmit through the material as if the material were a fluid.

The pressure of the first fluid also acts over a second hydraulic area that is established by second inner and outer sealing sites, and imparts a second axially-acting hydraulic thrust on the backup ring in a second hydraulic force direction that is opposite to the first hydraulic force direction of the first axially-acting hydraulic thrust.

The pressure of the first fluid can be transmitted to the first hydraulic area by any suitable means, such as through both the first fluid and the sealing material of the dynamic seal. If desired, this method of pressure transmission can be supplemented by the pressure of the first fluid acting through sealing material of the optional face seal. If the optional face seal is employed, it is preferred that a region of annular clearance exist between the outer periphery of the dynamic seal and the inner periphery of the optional face seal.

The pressure of the first fluid can be transmitted to the second hydraulic area by any suitable pressure passage means, such as cross-drilled holes, which may, if desired, be combined with annular clearance or one or more axial slots, or such as external piping, or such as the above described annular clearance between the dynamic seal and the optional face seal, combined with one or more pressure communication holes that pass through the length of the backup ring.

Where possible, distribution clearances of a generally circular nature should be provided within the second hydraulic area to provide a generally circular distribution channel to facilitate the rapid application of the pressure of the first fluid to the second hydraulic area of the backup ring. These distribution clearances can be built into the backup ring, the mating housing structure, or both.

The areas of the first and second hydraulic areas are preferably substantially equal, so that the first and second axially-acting hydraulic thrust forces are substantially equal, substantially freeing the backup ring from axially-acting hydraulic force imbalance that would create friction that would inhibit lateral motion of the backup ring.

The pressure of the second fluid preferably acts on all of the inner, outer, and end surface areas of the backup ring that are not acted on by the pressure of the first fluid.

The pressure of the second fluid is preferably communicated to the outer periphery of the backup ring so that the pressure of the second fluid acts on both the inner and outer peripheries of the backup ring. The pressure of the second fluid can be communicated to the outer periphery of the backup ring by any suitable means, such as one or more holes/pressure ports penetrating from the inner periphery of the backup ring to the outer periphery of the backup ring, or such as one or more holes/pressure ports passing through the housing structure that locates the backup ring. Both of these described pressure communication methods can be incorporated at the same time, if desired. If desired, the inner periphery of the backup ring can incorporate a circular groove for rapid circumferential distribution of the pressure of the second fluid into the clearance between the backup ring and the shaft, and can include an axial slot for rapid communication of the pressure of the second fluid to the circular groove.

The axial positions of the sealing sites are at the axial location of the corresponding end surface of the backup ring at the extrusion gap corresponding to the sealing site. What this means is that any axial extrusion gap clearance at the first outer sealing site or the second outer sealing site does not count when determining the axial spacing between first and second sealing sites. What this also means is that any axial extrusion gap clearance at the second inner sealing site does not count when determining the axial spacing between the first and second inner sealing sites. What this also means is that the axial location of the first inner sealing site is at the axial location of the innermost portion of the corresponding end of the backup ring.

In the simplest embodiment, and typically the preferred embodiment, the axial spacing between the first and second inner sealing sites is substantially equal to the axial spacing between the first and second outer sealing sites. This arrangement allows the backup ring to be substantially pressure balanced in the radial direction, which may be all that is needed for many applications. In such cases, the ends of the backup ring are simply planar (flat), and the length between the first and second sealing sites is simply the length of the backup ring.

In a backup ring with planar ends, the surface area of the outer periphery of the backup ring is greater than the surface area of the inner periphery of the backup ring. If the pressure of the second fluid is high and acts on both the inner and outer peripheries, the result can be inward deformation of the backup ring due to force imbalance. Force is equal to pressure times area. The second pressure acting on the outer periphery creates more inward force, compared to the outward force created by the second pressure acting on the inner periphery. This force imbalance usually doesn't matter on smaller diameter backup rings because of the proportions of the ring. It can matter, however, in larger diameter backup rings.

If desired, the higher pressure of the first fluid can be used to create a radially outwardly acting hydraulic force to counteract the radial force imbalance resulting from the greater area of the outer periphery as compared to the inner periphery of the backup ring. For example, the axial spacing between the first and second outer sealing sites can be made a little greater than the axial spacing between the first and second inner sealing sites and the difference in axial spacing can be acted upon by the first fluid pressure. This allows the first fluid pressure to create a radially outwardly acting hydraulic force to compensate for radial force imbalance resulting from the greater area of the outer periphery as compared to the inner periphery of the backup ring.

The first and second fluids may be provided through ports if desired. Such ports can be located in the housing. If desired, when used with an outboard seal that partitions the second fluid from a third fluid, the pressure of the second fluid can be less than the pressure of the first fluid, yet greater than the pressure of the third fluid for pressure staging purposes, so that the dynamic seal and the outboard seal are exposed to differential pressures that are less than the pressure of the first fluid. If desired, the outboard seal can also use the laterally translatable backup ring of the present invention.

To facilitate lateral movement of the backup ring in response to the lateral motion of the relatively movable member, the first and second hydraulic forces should typically be substantially equal. In some cases the axial forces acting on the backup ring may include other forces in addition to the aforementioned hydraulic forces. For example, in a vertical shaft application, the weight of the backup ring acts in an axial direction. For another example, the compressive force of the sliding face seals acts in the axial direction. Such forces are relatively negligible, and only the hydraulic forces typically need to be taken into account. Whether one is only balancing the axial hydraulic forces, or also balancing other axial forces such as, but not limited to, backup ring weight and seal compressive force, such balancing can be accomplished in the present invention by proper sizing of the first and second hydraulic areas. In some cases, it may be desirable to design in a slight hydraulic imbalance to close the extrusion gap clearance at the second inner and outer sealing sites, or at the first outer sealing site. All of these slight hydraulic imbalances are intended to fall within the scope of what is meant by a condition of substantial axial force balance, or substantial axial pressure balance.

The invention is typically used in equipment where a relatively movable member (such as a shaft) is separated from a machine housing by an annular gap, and a resilient dynamic seal is in sealing engagement with the relatively movable member, in order to retain a first fluid. The backup ring is located between the rotary seal and the annular gap.

The backup ring has a bearing relationship with the relatively movable member, and is typically located radially (i.e., laterally) by this bearing relationship, and thus can follow lateral motion of the relatively movable member. Such lateral motion can result from factors such as runout, vibration, and load related deflection. In the simplest and preferred bearing implementation, the inner periphery of the backup ring has at least one dynamic surface that faces the relatively movable member and serves as a journal bearing to locate the backup ring laterally with respect to the relatively movable member. If desired, the bearing relationship between the backup ring and the relatively movable member can be established by any suitable bearing means, such as rolling element bearings. If desired, the bearing of the backup ring can be exposed to a lubricant for lubricating purposes. If desired, this lubricant can be retained by an outboard seal of any suitable configuration. In such cases, an outboard seal can, if desired, separate the lubricating second fluid from a third fluid, such as the atmosphere. In cases where the dynamic seal is a hydrodynamic seal, and the second fluid is atmosphere, the hydrodynamic pumping-related leakage of the dynamic seal (which occurs as a result of relative motion between the relatively movable member and the dynamic seal) can enter into the second fluid and provide lubrication to the bearing of the backup ring.

The backup ring is typically located at least in part by a structural surface of the machine component, and in some cases may be supported by the structural surface. The outer periphery of the backup ring is preferably isolated from the pressure of the retained first fluid by the use of sealing material at the first and second outer sealing sites. These first and second sites are on opposite sides of the backup ring,

The backup ring preferably has a modulus of elasticity at the annular gap that is greater than the modulus of elasticity of the resilient sealing material of the dynamic seal. The backup ring faces and bridges the annular gap between the housing and the relatively movable member, and defines and minimizes the effective extrusion gap clearance that the dynamic seal is exposed to, which increases the differential pressure capability of the dynamic seal. Metals and some plastics are examples of backup ring materials that have a modulus of elasticity that is greater than the modulus of elasticity of resilient seal materials. The preferred material for construction of the majority of the backup ring is metal, and preferably is a high modulus metal such as steel.

Preferably the backup ring is secured by a retainer that defines the extrusion gap clearance of the previously described first outer sealing site. Preferably, the size of the extrusion gap clearance of the first outer sealing site and the second inner and outer sealing sites is controlled by the axial length of the spacer section relative the captured axial length of the backup ring.

The dynamic seal and face seals that are used with the backup ring of the present invention may, if desired, incorporate one or more seal materials without departing from the spirit or scope of the invention, and may be composed of any suitable sealing material or materials, including elastomeric or rubber-like materials which may, if desired, be combined with various plastic materials such as reinforced polytetrafluoroethylene ("PTFE") based plastic. If desired, the seals may be of monolithic integral, one piece construction or may also incorporate different materials bonded, co-vulcanized, or otherwise joined together to form a composite structure. Different materials may also be simply layered together radially or axially to create an effective seal. For example, prior art T-seals are composed of a ring of elastomer that is compressed against the surface to be sealed, and one or more mating rings of plastic to provide reinforcement at the extrusion gap. For another example, cap seals include an O-ring that compresses a plastic ring against the surface to be sealed, thereby presenting the plastic to the extrusion gap.

The invention is suitable for use with both compression-type (i.e., interference-type) and flexing, lip-type dynamic seals. The compression-type dynamic seal is maintained in direct compression against the relatively movable member in order to establish sealing contact force with the relatively movable member. The flexing lip-type seals include a flexible dynamic lip that contacts the relatively rotatable member. Sealing contact force is established by flexure of the dynamic lip, which can be assisted by energizing elements such as a spring or a compressed rubber element.

The invention can be configured for radial sealing applications where the dynamic seal and the backup ring slide dynamically with respect to a relatively movable surface of generally cylindrical form, such as the outwardly-facing surface of a shaft or sleeve, or the inwardly-facing surface of a bore.

The backup ring can, if desired, include at least one anti-rotation feature configured to engage an anti-rotation feature of another component, in order to prevent rotation of the backup ring in the event that relative rotation is present between the relatively movable member and one or more of the components that locate the backup ring axially. For example, the backup ring can incorporate an axially- or radially-oriented anti-rotation projection that engages a recess in the housing or the retainer. As another example, the anti-rotation projection can project from the retainer or the housing, and can engage a recess in the backup ring. The anti-rotation projection can be an integral part of the backup ring, retainer, or housing that it projects from. Alternately, the anti-rotation projection can be a separate piece secured to, or partly recessed in, the backup ring, retainer, or housing that it projects from.

The assembly of the present invention may be installed within a pressure housing of a machine, or a component of the present invention may serve as the pressure housing of a machine. The pressure housing may have a flange for threaded fasteners if desired. A static seal may be used to provide sealing between the pressure housing and some other machine element or elements. Oppositely facing pressure housing ends may provide surfaces for engaging and sealing with respect to other connecting equipment. Each of those ends may incorporate a groove for a ring gasket or other type of static seal. Each end surface may also include fastening means, such as threads, or a circle of tapped holes, for connecting with other equipment.

It is understood that the pressure housing can be integral to another machine component, and either end, or both, can be attached to other machine components, if desired. For example, a housing containing bearings or bearing surfaces that guide, or are guided by, the relatively movable member could be included at either end of the pressure housing, or on both ends of pressure housing,

The pressure housing could optionally mount the bearings that guide, or are guided by, the relatively movable member, if desired. The pressure housing and the relatively movable member may have relative rotation with respect to one another. This is usually accomplished by configuring the relatively rotating member to be a shaft, and rotating the relatively movable member within the pressure housing. The relatively movable member is preferably supported for rotation by bearings. The bearings can be in the first fluid, the second fluid, and/or even in a third fluid such as the atmosphere.

The dynamic seal is preferably a hydrodynamic seal that exploits relative motion to lubricate the interface between the dynamic seal and the relatively movable surface. This hydrodynamic action is accomplished by having the seal provide at least one surface that converges gently with the relatively rotatable surface, so that the gentle convergence forms a hydrodynamic inlet for wedging the first fluid into the interface as a result of at least one direction of relative axial or rotational motion. In seals adapted for hydrodynamic lubrication in response to both relative rotation and one direction of relative axial motion, the gentle convergence may occur at a wavy flank of the seal that faces the first lubricant. As a result of the wavy flank, the interface between the dynamic seal and the relatively movable surface, which is sometimes called a "footprint," has a wavy edge facing the first fluid, which is preferably a lubricant.

The present invention is adaptable to many different types of equipment, such as, but not limited to, oilfield rotating control devices, pumps, oilfield rotary steerable tools, hydraulic swivels, machine tools, downhole drilling mud motors, rock drilling machines, piston amplifier-type lubricant reservoirs, side port oilfield drilling or cementing swivels, and coaxial swivels such as oilfield washpipe assemblies.

### BRIEF DESCRIPTION OF THE DRAWINGS

So that the manner in which the above recited features, advantages and aspects of the embodiments of the present invention are attained and can be understood in detail, a more particular description of the invention, briefly summarized above, may be had by reference to the preferred embodiments thereof which are illustrated in the appended drawings, which drawings are incorporated as a part hereof.

It is to be noted however, that the appended drawings illustrate only typical embodiments of this invention and are therefore not to be considered limiting of its scope, for the invention may admit to other equally effective embodiments.
Figure 1 is a fragmentary cross-sectional view of a portion of a sealed machine assembly according to a preferred embodiment of the present invention;
Figure 1A is an axonometric view of an embodiment of the backup ring shown in FIG.1;
Figures 2-9, 12 and 13 are fragmentary cross-sectional views of a portion of a sealed machine assembly according to other embodiments of the present invention; and
Figures 10 and 11 are schematic cross-sectional representations of a shaft and the backup ring according to various embodiments of the present invention.

### DESCRIPTION OF EMBODIMENTS OF THE INVENTION

The aspects, features, and advantages of the embodiments of the invention mentioned above are described in more detail by reference to the drawings, wherein like reference numerals represent like elements.

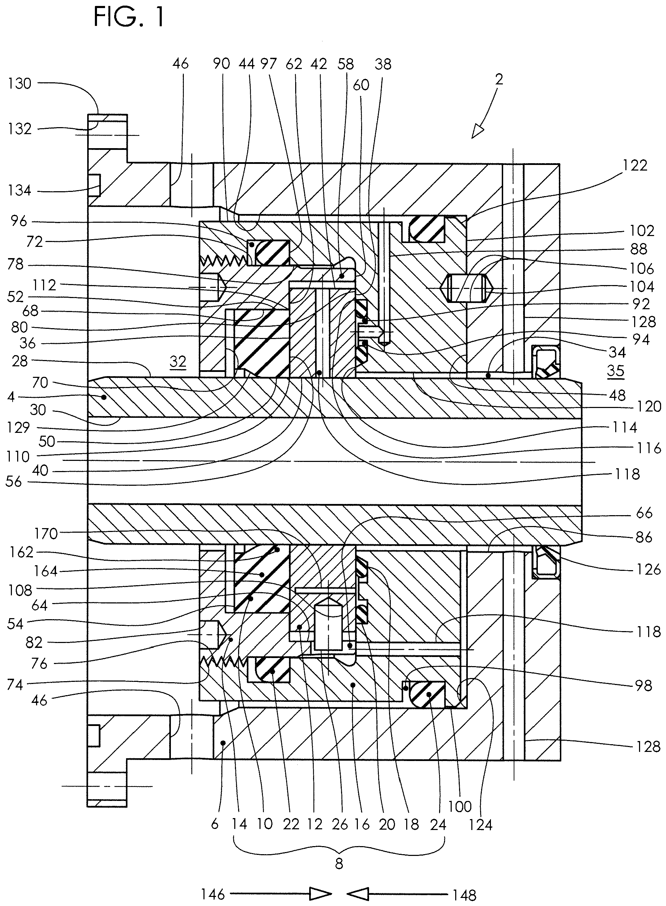

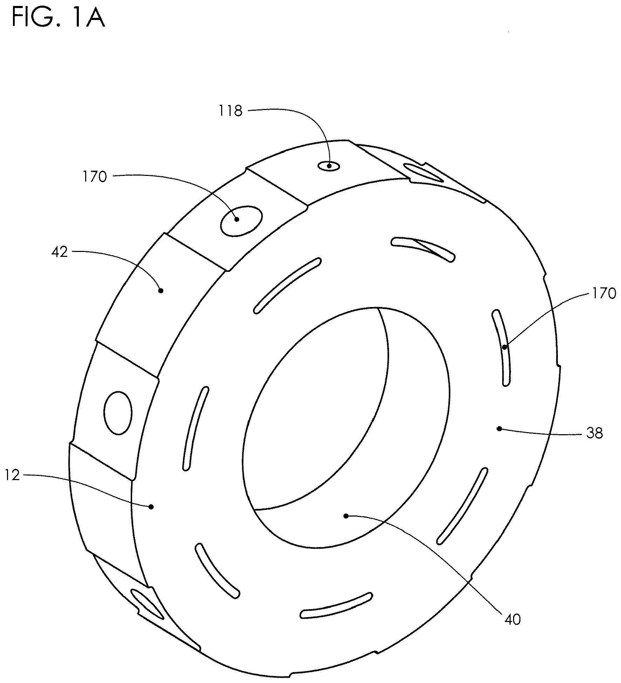

Figure 1 features throughout this specification that are represented by like numbers have the same basic function. Referring now to the drawings and first to FIG. 1, a longitudinal cross-sectional view of a sealed machine assembly is shown generally at 2, showing the parts located concentrically to one another.

The machine assembly 2 incorporates a shaft 4 that is relatively movable with respect to a machine housing 6, and is relatively movable with respect to a sealing assembly 8. The sealing assembly 8 is preferably comprised of a number of components including a dynamic seal 10, a backup ring 12, a retainer 14, a bulkhead housing 16, an inner balancing seal 18, an outer balancing seal 20, a retainer seal 22, a housing seal 24, and an anti-rotation tang 26.

By the term "longitudinal cross-sectional view," what is meant throughout this specification is the imaginary cutting plane of the cross-sectional view is aligned with and passes through the theoretical axis of the shaft 4. The term "axis" is well-understood in mechanical engineering, and in the field of drafting is sometimes illustrated using a centerline in longitudinal cross-sectional views, as has been done in FIG. 1.

The shaft 4 is located at least partially within the housing 6, dynamic seal 10, backup ring 12, retainer 14, bulkhead housing 16, inner balancing seal 18, outer balancing seal 20, and retainer seal 22. In other words, the housing 6, dynamic seal 10, backup ring 12, retainer 14, bulkhead housing 16, inner balancing seal 18, outer balancing seal 20, and retainer seal 22 surround at least part of the shaft 4. The retainer 14 preferably surrounds, and is preferably located radially outward of, at least a portion of the shaft 4 and is preferably located at least partially within the bulkhead housing 16 and is preferably retained to the bulkhead housing 16. Arrangements are possible, however, where the retainer 14 is not located within the bulkhead housing 16.

The machine housing 6 and sealing assembly 8 are preferably stationary with respect to one another in the axial and rotational directions, such that relative axial and/or rotary motion between the shaft 4 and sealing assembly 8 also results in relative axial and/or rotary motion between the shaft 4 and the machine housing 6. The shaft 4 and sealing assembly 8 have relative axial and/or rotary motion with respect to each other during at least some portion of the operation of the machine assembly 2. Whether or not relative reciprocation is occurring, the shaft 4 may rotate within the sealing assembly 8, the sealing assembly 8 may rotate around the shaft 4, or both the shaft 4 and sealing assembly 8 may rotate at different speeds and/or directions, resulting in relative rotation between the shaft 4 and the sealing assembly 8. Whether or not relative rotation is occurring, the shaft 4 may reciprocate within the sealing assembly 8, the sealing assembly 8 may reciprocate along the shaft 4, or both the shaft 4 and sealing assembly 8 may reciprocate at different speeds and/or directions, resulting in relative axial motion (relative reciprocation) between the shaft 4 and the sealing assembly 8. Factors such as, but not limited to, vibration and side loads can cause relative lateral motion between the shaft 4 and the machine housing 6 (and between the shaft and various components of the sealing assembly 8), especially during periods of relative rotation and/or relative reciprocation.

The shaft 4 includes an external sealing surface 28 of generally cylindrical form that is located at least partially within the dynamic seal 10, backup ring 12, retainer 14, and bulkhead housing 16. Since the sealing surface 28 is part of the shaft 4, it has relative motion with respect to the sealing assembly 8 whenever the shaft 4 does. If desired, the shaft 4 can take the form of a sleeve (often called a wear sleeve) that is mounted on, and therefore a component of, another shaft. At least part of the sealing surface 28 is preferably located at least partially within the bulkhead housing 16, and is preferably relatively movable with respect to the bulkhead housing 16.

If desired, the shaft 4 may also include an internal passage 30. Such an internal passage 30 can serve various purposes, as desired. For example, the internal passage may serve as a conduit for fluid, or may provide an opening for receiving some other machine component. For example, the passage within the shaft of an oilfield rotary steerable tool or of an oilfield washpipe assembly serves as a conduit for drilling fluid, and the passage within the shaft of an oilfield rotary control device provides an opening allowing the passage of a drill string. When the machine assembly 2 is used as part of a rotary control device, one or more passive stripper rubbers or active packing elements may be attached to the shaft 4 for sealing with respect to a drill string passing through the internal passage 30.

Although the subject matter is sometimes described herein in the context of a rotary control device for control of well pressure while drilling, or in the context of an oilfield washpipe assembly, it is to be understood that the invention is applicable to other types of machinery. In a rotating control device of the general type shown in U.S. Pat. Nos. 5,588,491 and 5,662,171, the shaft is capable of both rotational and reciprocating motion relative to the dynamic seal, which makes such a rotating control device an exceptionally appropriate example of where the present invention can be advantageously used.

In some equipment, the pressure of a first fluid 32 may also be used as a hydraulic control pressure. For example, in an active-type rotating control device, the pressure of the first fluid 32 is sometimes used to actuate the active packing element around a drill string. For example, in U.S. Pat. No. 5,279,365, hydraulic pressure causes an outer packer to urge an elastomeric inner packer radially inward against the drillstring, without requiring an axially moving piston.

If desired, the shaft 4 can be guided by bearings of any suitable type. If desired, such bearings can be located by and positioned by the machine housing 6 or the bulkhead housing 16, or located by and positioned by some other machine component not represented by FIG. 1, such as a machine component directly or indirectly connected to the machine housing 6 or the bulkhead housing 16.

The sealing assembly 8 partitions the first fluid 32 from a second fluid 34, and may also partition the second fluid 34 from a third fluid 35, if desired. The backup ring 12 is designed especially to improve performance of the dynamic seal 10 in situations where the first fluid 32 is at a significantly greater pressure than the second fluid 34. The difference in pressure between one fluid and another, such as the first fluid 32 and the second fluid 34, is referred to as differential pressure. For purposes of this specification, the term fluid has its broadest possible meaning and encompasses both liquids and gases. The machine housing 6 preferably serves as a container for at least a portion of the first fluid 32, and defines a shaft passageway 86 which is larger than the shaft 4. The shaft passageway 86 is typically large enough to accommodate anticipated levels of relative lateral motion between the machine housing 6 and the shaft 4 without heavily loaded contact between the shaft 4 and the shaft passageway 86. If desired, however, the shaft passageway 86 could be provided with suitable length, clearance, and composition to serve as a journal bearing for guiding the shaft 4. It should be understood that the machine housing 6, the dynamic seal 10, the backup ring 12, the retainer 14, the bulkhead housing 16, the inner balancing seal 18, the outer balancing seal 20, the retainer seal 22, and the housing seal 24 preferably have a portion thereof exposed to the first fluid 32, and the pressure of the first fluid 32.

It should be understood that the machine housing 6, the dynamic seal 10, the backup ring 12, the retainer 14, the bulkhead housing 16, the inner balancing seal 18, the outer balancing seal 20, the retainer seal 22, the anti-rotation tang 26, an anti-rotation dog 104, an outboard seal 126, and the housing seal 24 preferably have a portion thereof exposed to the second fluid 34, and the pressure of the second fluid 34.

If desired, the machine housing 6 may include a flange 130 with bolt holes 132, or other suitable connection means, for connection to some other machine component or assembly not represented by FIG. 1, and may also include a seal gland 134 of any suitable type for holding a seal for establishing a sealed relationship with such other machine component or assembly.

The pressure of the first fluid 32 and/or the second fluid 34 can be provided by any suitable pressure supply, such as, but not limited to, the types of pressure supplies described in conjunction with the prior art. One form of a suitable pressure supply would be one of the prior art computer-controlled pressure supplies, where a hydraulic fluid is circulated through an orifice. Either the orifice size or the flow rate is varied to appropriately vary the pressure. Another example of a suitable pressure supply would be the differential area piston arrangement described in conjunction with prior art pressure-staged washpipe assemblies. Various types of prior art pressure supplies are described in the "Kalsi Seals Handbook," which is a publication of Kalsi Engineering Inc. of Sugar Land, TX.

The teachings of FIG. 1 are most applicable where the pressure of the first fluid 32 is typically greater than or equal to the pressure of the second fluid 34.

One purpose of the backup ring 12 is to support the dynamic seal 10 against differential pressure that may be acting across the dynamic seal 10 due to the pressure of the first fluid 32 being greater than the pressure of the second fluid 34. An aspect of the backup ring 12 is to prevent or minimize the extrusion damage of the dynamic seal 10. Another aspect of the backup ring 12 is to improve any intended hydrodynamic interfacial lubrication of the dynamic seal 10 by minimizing the differential pressure induced contact pressure between the dynamic seal 10 and the sealing surface 28 of the shaft 4 near the backup ring 12.

In its relaxed state, the diameter of the ring inner surface 40 of the backup ring 12 is preferred to be larger than the sealing surface 28 of the shaft 4 for ease of assembly. Preferably, the clearance between the ring inner surface 40 and the sealing surface 28 is made as small as practicable, considering factors such as tolerances, differential thermal expansion between the ring inner surface 40 of the backup ring 12 and the sealing surface 28 of the shaft 4 during operation, pressure-induced outward deformation (pressure breathing) of the shaft 4 and radial force imbalance that may act on the backup ring 12 to cause the diameter of the ring inner surface 40 to become smaller. This radial force imbalance can exist even though the pressure acting on the ring outer surface 42 and ring inner surface 40 is identical, because the area of the ring outer surface 42 is greater than the area of the ring inner surface 40.

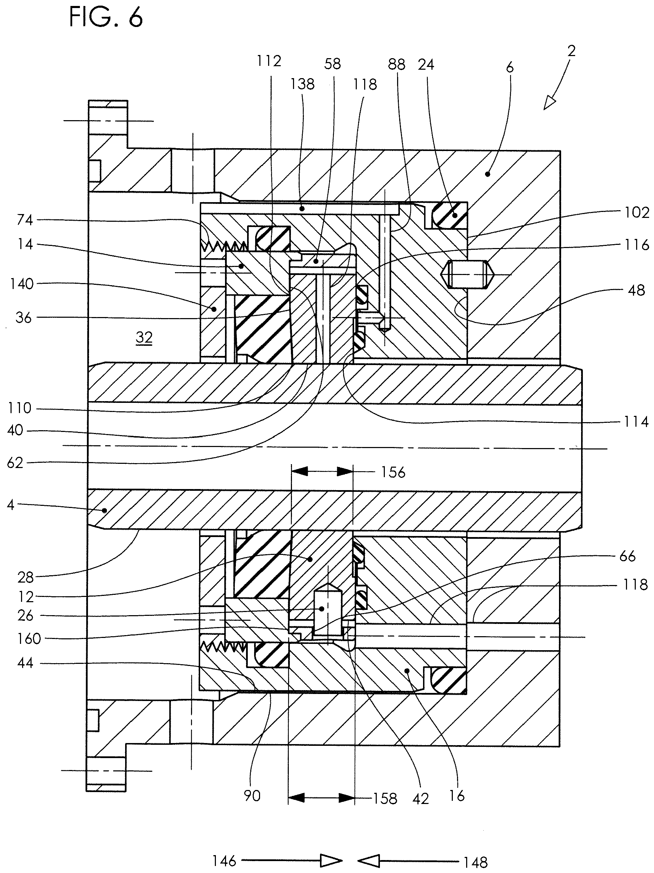

The backup ring 12 is of generally circular ring-like configuration, and has a first ring end 36 and a second ring end 38, which face in opposite directions. The first ring end 36 faces in the general direction of the first fluid 32 and a retaining shoulder 62 of the retainer 14, and the second ring end 38 faces in the general direction of the second fluid 34 and a locating shoulder 80 of the bulkhead housing 16. The locating shoulder 80 is preferably a generally planar (flat) surface, and preferably faces in a generally axial direction. Typically the first ring end 36 and the second ring end 38 of the backup ring 12 are substantially planar (flat) surfaces that are parallel to one another, but as shown by and described in conjunction with Figure 6, other arrangements are possible and may be employed in certain special cases where it is desired that radial force imbalance be addressed.

If desired, the first ring end 36 and second ring end 38 of the backup ring 12, the sealing surface 28 of the shaft 4, the retaining shoulder 62 of the retainer 14 and/or the locating shoulder 80 of the bulkhead housing 16 may be treated with a low friction and/or hard surfacing treatment, to enhance the wear resistance and/or the frictional properties thereof. Examples of such treatments include nickel- or cobalt-based tungsten carbide coatings, PTFE coating, diamond coating, boronizing, hard chrome coating, nitriding, colmonoy, stellite or other welded hardfacing, or other surface enhancement coatings or surface modification techniques, including ion beam deposition.

The backup ring 12 has a ring inner surface 40 and a ring outer surface 42. The ring inner surface 40 is preferably generally cylindrical, and encircles and faces the sealing surface 28 of the shaft 4, preferably serving as a journal bearing to locate the backup ring 12 laterally with respect to the sealing surface 28 of the shaft 4. For ease of manufacture, the ring outer surface 42 may be generally cylindrical, if desired.

The clearance between the ring inner surface 40 and the sealing surface 28 defines the extrusion gap that the dynamic seal 10 must bridge/seal in order to withstand the differential pressure between the first fluid 32 and the second fluid 34, and to prevent the pressure driven wholesale loss of the first fluid 32.

Throughout this specification, the portion of the backup ring 12 that establishes the ring inner surface 40 at the first inner sealing site 110 is preferably made from a material having a greater modulus of elasticity than the modulus of elasticity of the portion of the dynamic seal 10 which is in contact with the sealing surface 28 of the shaft 4 at the first inner sealing site 110. Indeed, it is preferred that all or substantially all of the backup ring 12 be made from a material having a greater modulus of elasticity than the modulus of elasticity of the portion of the rotary dynamic seal 10 which is in contact with the sealing surface 28 of the shaft 4 at the first inner sealing site 110. The backup ring is preferably comprised of metal and in many cases will be entirely composed of metal.

The machine housing 6 preferably comprises at least one housing bore 44, at least one fluid port 46, and a support shoulder 48 of generally planar configuration. The at least one housing bore 44 preferably surrounds the housing seal 24 and preferably surrounds at least part of the shaft 4.

If desired, the first fluid 32 can be circulated in through one fluid port 46 and out another fluid port 46, for cooling purposes. Obviously, the inlet or exit port can also be located in some other component connected directly or indirectly to the sealing assembly 8 if desired. If desired, the first fluid 32 and/or the second fluid 34 can be a lubricant or otherwise have lubricating properties. If desired, the second fluid 34 can be retained by an outboard seal 126. If desired, an outboard port 128 can be incorporated for introducing the second fluid 34 into the sealed region between the dynamic seal 10 and the outboard seal 126. If desired, more than one outboard port 128 can be incorporated for circulating the second fluid 34 for cooling or other purposes. If desired, the outboard seal 126 could be incorporated into a laterally translating seal carrier (not shown) of a type known in the prior art, such that the outboard seal 126 could translate laterally in concert with any lateral motion of the shaft 4. If desired, the outboard seal 126 could also be supported by a laterally translatable backup ring of the general type disclosed by this specification. As a simplification, if desired, the outboard seal 126 and outboard port 128 may be omitted.

Preferably, the dynamic seal 10 includes a seal body 164 of generally circular ring-like construction comprised of sealing material. The dynamic seal 10 encircles the sealing surface 28 of the shaft 4. The seal body 164 includes a dynamic lip 162 having a dynamic sealing surface 50 that may project radially inward, contacting and establishing a sealed relationship with the sealing surface 28 of the shaft 4, however arrangements are possible (such as with a cap seal) where the dynamic sealing surface 50 is not part of a projecting dynamic lip. The dynamic seal 10 also may have a static sealing surface 52, a first seal end 54, and a second seal end 56. The dynamic sealing surface 50 is held in sealing contact with the sealing surface 28 of the shaft 4. When the shaft 4 and dynamic seal 10 have relative axial and/or rotational movement with respect to one another, the sealing contact between the dynamic sealing surface 50 and the sealing surface 28 is a sliding sealing contact. When the shaft 4 and dynamic seal 10 do not have relative axial or rotational movement with respect to one another, the sealing contact between the dynamic sealing surface 50 and the sealing surface 28 is a static sealing contact. The first seal end 54 faces the first fluid 32, and the second seal end 56 faces the first ring end 36. Preferably, when the differential pressure acts on the dynamic seal 10, at least part of the second seal end 56 contacts, and is supported by, at least part of the first ring end 36, applying the pressure of the first fluid 32 to the first ring end 36.

It is to be understood that the term "dynamic seal" is provided as the name for a particular seal of the sealing assembly 8, the term "dynamic lip" is provided as the name of a particular feature on that seal, and the term "dynamic sealing surface" is provided as the name of a particular surface on that seal. The terms "ring-like" and "ring" are used with the understanding that the term "ring" is commonly understood to encompass shapes other than the perfectly circular. As an example, a decorative finger ring often has beaded edges or a sculpted shape, yet is still called a ring. As another example, the "ring" of Lewis F. Koms' U.S. Pat. No. 1,462,205 is not everywhere circular. There are numerous precedents for using the term "ring-like" in a patent, and many patents use the term in conjunction with a seal or a body of a seal. For example, see U.S. Pat. Nos. 612,890, 4,361,332, 4,494,759, 4,610,319, 4,660,839, 4,909,520, 5,029,879, 5,230,520, 5,584,271, 5,678,829, 5,833,245, 5,873,576, 6,109,618, and 6,120,036. Note that in many of the examples, the item in question has features that result in the shape not being everywhere circular; for example, in some cases the dynamic lip of a ring-like seal has a wavy flank shape.

If desired, the dynamic seal 10 can be a hydrodynamic rotary seal with the dynamic lip 162 having a lubricant side flank 129 that is preferably wavy in the axial direction, exposed to the first fluid 32, and configured to provide a hydrodynamic inlet that hydrodynamically wedges a lubricating film of the first fluid 32 between the dynamic sealing surface 50 and the sealing surface 28 in response to relative rotation between the dynamic seal 10 and the sealing surface 28 of the shaft 4. The lubricant side flank 129 also provides a hydrodynamic inlet that wedges lubricant between the dynamic sealing surface 50 and the sealing surface 28 in response to one direction of relative axial motion. The lubricant side flank 129 is preferably sloped with respect to the sealing surface 28 of the shaft 4, and this slope provides gradual convergence with the sealing surface 28 of the shaft 4. This gradual convergence is one of the features that provides the hydrodynamic inlet aspect of the dynamic seal 10, introducing a film of the first fluid 32 between the dynamic sealing surface 50 and the sealing surface 28 in response to relative axial or rotational motion between the dynamic seal 10 and the sealing surface 28 of the shaft 4. If relative rotation is not anticipated, the wavy aspect of the lubricant side flank 129 is not strictly needed, but the sloping with respect to the sealing surface 28 may still be desirable to provide lubrication in response to relative axial motion. The slope of the lubricant side flank 129 in the axial direction also provides slope in the circumferential directions if the lubricant side flank 129 varies in position axially in a wavy pattern.

When relative rotation is anticipated, it is preferred that dynamic seal 10 in FIG. 1, and in other figures herein, be a hydrodynamic seal such as those sold by Kalsi Engineering, Inc. under the registered trademark KALSI SEALS®. The dynamic sealing surface 50 of such seals is lubricated in response to relative rotation, as the result of the special hydrodynamic lubrication features of KALSI SEALS® seals. These hydrodynamic features can be broadly characterized as establishing a sealing footprint against the relatively movable surface of the shaft 4, wherein the footprint has a wavy footprint edge that faces the first fluid 32.

Examples of such seals are provided in U.S. Pat. Nos. 4,610,319; 5,195,754; 5,230,520; 5,678,829; 5,738,358; 5,823,541; 5,873,576; 6,007,105; 6,036,192; 6,109,618; 6,120,036; 6,227,547; 6,315,302; 6,334,619; 6,382,634; 6,494,462; 6,561,520; 6,685,194; 6,767,016; 7,052,020; 7,562,878; and 8,056,904. Among these, the seals disclosed by U.S. Pat. Nos. 7,562,878 and 8,056,904, entitled "Low Torque Hydrodynamic Lip Geometry for Bi-Directional Rotation Seals," are preferred because of their low running torque and heat generation characteristics, and the ability to handle high differential pressure with thin, low viscosity lubricants.

The sealing material referenced herein can be any sealing material, including elastomeric or rubber-like materials such as an elastomer compound or a combination of one or more elastomer compounds, and including various plastic materials, and including different materials bonded together to form a composite structure or inter-fitted together, or stacked axially together radially or axially, and including a combination of a suitable plastic and an elastomer compound, and including fabric reinforced elastomer.

It is commonly understood by those having ordinary skill in the art that elastomers used in seal construction are compounds that include one or more base elastomers. Such base elastomers include, but are not limited to, HNBR (hydrogenated nitrile) which is also known as HSN (highly saturated nitrile), FKM (fluorocarbon rubber), FEPM (also known as TFE/P or tetrafluoroethylene and propylene copolymer), and EPDM. Such compounds may include other compounding agents including fillers, processing aids, anti-degradants, vulcanizing agents, accelerators and activators. The effects of the ingredients used are generally understood by those of ordinary skill in the art of compounding elastomers. Likewise, the ingredients used in manufacturing plastics that are used in sealing applications are generally understood by those of ordinary skill in the art of developing plastic materials.

The retainer 14 defines a spacer section 58 between a spacer nose 60 and the retaining shoulder 62. The axial length of the spacer section 58 is the axial distance between the spacer nose 60 and the retaining shoulder 62. For the purpose of discussing the fit of the backup ring 12 between the retaining shoulder 62 of the retainer 14 and the locating shoulder 80 of the bulkhead housing 16, the "captured axial length" of the backup ring 12 is the axial distance between the portions of the first ring end 36 and the second ring end 38 that fit directly between the retaining shoulder 62 and the locating shoulder 80. The axial length of the spacer section 58 is slightly greater than the captured axial length of the backup ring 12, to ensure that the backup ring 12 cannot be clamped between the retaining shoulder 62 and the bulkhead housing 16. This lack of clamping is one factor that ensures the ability of the backup ring 12 to move laterally in response to any lateral motion of the shaft 4. For example, if the axial length of the spacer section 58 was 0.003 inches longer than the captured axial length of the backup ring 12, the backup ring 12 would not be clamped between the retaining shoulder 62 of the retainer 14 and the locating shoulder 80 of the bulkhead housing 16, and the axial extrusion gap at a first outer sealing site 112 would be relatively small.

The spacer bore 64 of the spacer section 58 is larger than the ring outer surface 42 of the backup ring 12, so as to allow room for the backup ring 12 to move laterally in response to any lateral motion of the shaft 4. The shape of the spacer bore 64 is preferably circular, for ease of manufacture. The spacer section 58 preferably includes an anti-rotation pocket 66 to receive the anti-rotation tang 26, however the anti-rotation tang 26 and the anti-rotation pocket 66 can be eliminated if little or no relative rotation is anticipated between the shaft 4 and the retainer 14. In FIG. 1, the anti-rotation pocket 66 is illustrated as an axially oriented slot, but other suitable shapes are possible, such as radially-oriented drilled through holes, and radially-oriented internal blind holes, as shown in other figures.

If desired, the retainer 14 may form a gland bore 68 and a gland wall 70 for locating the dynamic seal 10. The gland bore 68 is located in spaced relation to the sealing surface 28 of the shaft 4. The retainer 14 preferably includes a retainer sealing surface 72 that is in sealing engagement with the retainer seal 22. The retainer 14 preferably includes external threads 74, and the bulkhead housing 16 preferably includes mating internal threads 76, allowing the retainer 14 to be threadedly retained to the bulkhead housing 16. Additional locking features can be added, if desired, to lock the threads from loosening. The external threads 74 and the internal threads 76 are preferably clocked in a direction that matches any predominant direction of relative rotation between the shaft 4 and the retainer 14. If desired, the retainer 14 may incorporate wrench engaging surfaces 82 to facilitate tightening of the external threads 74 of the retainer 14 to the internal threads 76 of the bulkhead housing 16. In FIG. 1, the wrench engaging surfaces 82 are illustrated as blind holes for engaging a spanner wrench, but may take other appropriate forms, such as a hexagonal form for engaging a hexagonally-shaped wrench. If desired, the bulkhead housing 16 may also incorporate wrenching surfaces of any appropriate form and location for engaging a wrench that is used when tightening the external threads 74 to the internal threads 76. In FIG. 1, the dog recess 106 of the bulkhead housing 16 can serve as such a wrenching surface.

The retainer 14 may be retained or attached to the bulkhead housing 16 by any suitable retaining or attachment means, including threaded means such as threads, bolts, screws and studs, retaining rings, hammer unions, etc., and including external clamping means, bayonet-type latches, deformable rims or tangs, retaining ring(s), welding, soldering, bonding, friction, interference fit, etc. without departing from the spirit or scope of the invention. The retainer 14 and bulkhead housing 16 may be made from any suitable material, such as metal, plastic or reinforced plastic, or a combination thereof.

The retainer 14 can be of any suitable configuration. For example, the spacer section 58 could be a separate component. Indeed, having the spacer section 58 as a separate component yields the advantage that the length of the spacer section 58 can be established by grinding, resulting in very precise control of the axial length of the spacer section 58. For another example, the threaded portion of the retainer 14 could be a separate threaded ring. For another example, the threads could be eliminated from the retainer 14 and the bulkhead housing 16, and the retainer 14 could be secured by a retaining ring engaging a retaining ring groove in the bulkhead housing 16.

The bulkhead housing 16 defines an internal cavity for receiving various components such as the backup ring 12 and the retainer 14, comprising a cavity bore 78 and the locating shoulder 80. The cavity bore 78 is an inwardly facing surface that is oriented toward the outwardly facing retainer sealing surface 72 and an outwardly facing surface of the spacer section 58. The spacer nose 60 is preferably in contact with the locating shoulder 80. The retainer 14 is preferably located at least partly within the cavity bore 78 and preferably surrounds at least part of the shaft 4. Preferably, the bulkhead housing 16 defines a pilot surface 100 that faces the machine housing bore 44, and serves to more or less center the bulkhead housing 16 with respect to the housing bore 44 of the machine housing 6. The diameter of an innermost surface 120 of the bulkhead housing 16 is preferably larger than the local size of the shaft 4, in order to provide room to accommodate any relative lateral movement between the shaft 4 and the machine housing 6. The cross-section of the bulkhead housing 16 is preferably generally L-shaped, as shown. Although the bulkhead housing 16 is illustrated as a single component, it could be formed of two or more components fastened together, if desired.

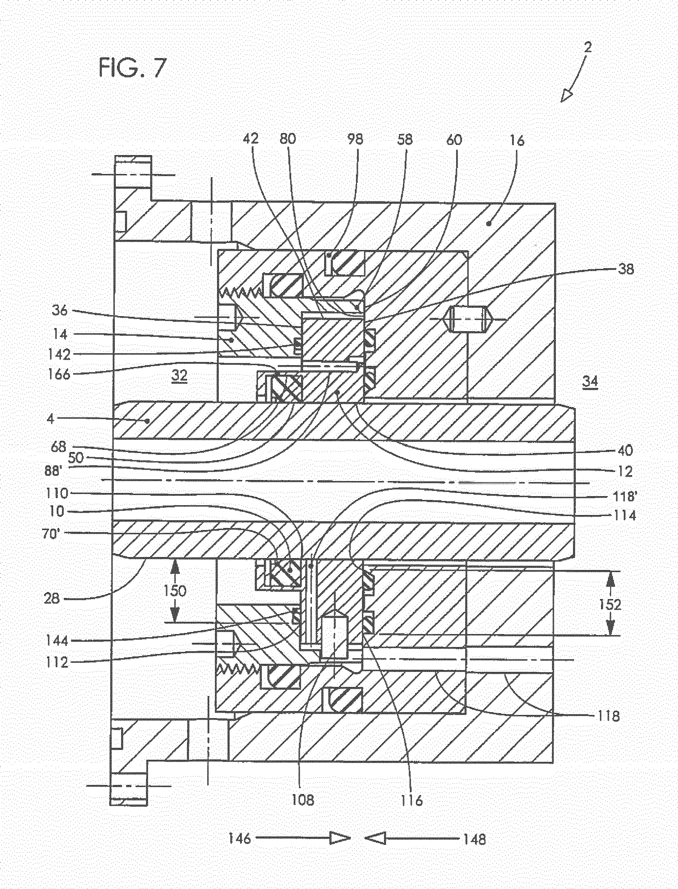

The sealing assembly 8 provides a pressure passageway for communication of the first fluid 32 to the region between the inner balancing seal 18 and the outer balancing seal 20. This communication can be provided by any appropriate means. In FIG. 1, this pressure passageway consists of the annular clearance between the housing bore 44 of the machine housing 6 and an exterior surface 90 of the bulkhead housing 16, combined with the pressure passage 88. Other appropriate means are possible. For example, an axial hole (not shown) through the bulkhead housing 16, connecting with the pressure passage 88, would serve the same pressure communication function as the annular clearance between the housing bore 44 of the machine housing 6 and the exterior surface 90 of the bulkhead housing 16. In FIG. 1 the pressure passage 88 is illustrated as a cross-drilled hole (i.e. a combination of intersecting holes) in the bulkhead housing 16, but other arrangements are possible where the pressure passage 88' passes through the backup ring 12, as shown in FIG. 7.

The inner balancing seal 18 is comprised of sealing material, can take any suitable form, and is deployed in face sealing fashion between the bulkhead housing 16 and the second ring end 38 of the backup ring 12, and establishes a sealed relationship between the bulkhead housing 16 and the backup ring 12. This sealed relationship prevents the escape of the first fluid 32 into the second fluid 34. The inner balancing seal 18 is illustrated as being mounted in an inner seal groove 94 that is cut into the locating shoulder 80 of the bulkhead housing 16, however as an alternative, the inner seal groove 94 could be cut into the second ring end 38 of the backup ring 12. The important thing is that the inner balancing seal 18 establish sealing between the bulkhead housing 16 and the second ring end 38 of the backup ring 12.

The outer balancing seal 20 is comprised of sealing material, can take any suitable form, and is deployed in face sealing fashion between the bulkhead housing 16 and the second ring end 38 of the backup ring 12, and establishes a sealed relationship between the bulkhead housing 16 and the backup ring 12. This sealed relationship prevents the escape of the first fluid 32 into the second fluid 34. The outer balancing seal 20 is illustrated as being mounted in an outer seal groove 92 that is cut into the locating shoulder 80 of the bulkhead housing 16, however as an alternative, the outer seal groove 92 could be cut into the second ring end 38 of the backup ring 12. The important thing is that the outer balancing seal 20 establish sealing between the bulkhead housing 16 and the second ring end 38 of the backup ring 12.

With reference to Fig. 1, it is to be understood that inner balancing seal 18 and outer balancing seal 20 have a sliding relationship with the backup ring 12 when the backup ring 12 is moving laterally with respect to the bulkhead housing 16 to follow any relative lateral motion between the bulkhead housing 16 and the shaft 4. The inner balancing seal 18 and outer balancing seal 20 are preferably selected from the group of seals which have low breakout friction and good extrusion resistance. If desired, the inner balancing seal 18 and outer balancing seal 20 can be treated or coated to achieve low breakout force characteristics.

The inner balancing seal 18 and outer balancing seal 20 can be compression-type elastomer seals if desired. With compression-type elastomer seals the pressure of the first fluid 32 acts throughout the elastomer as if the elastomer were a fluid. This means that the effective pressure boundary is established at the seal groove wall that is closest to the second fluid 34.

T-seals are a preferred type of seal for use as the inner balancing seal 18 and outer balancing seal 20. T-seals are a well-known type of prior art seal known for low friction and good extrusion resistance in high differential pressure conditions. With a T-seal, the effective pressure boundary is also established at the seal groove wall that is closest to the second fluid 34, even though the T-seal places a plastic backup ring against the seal groove wall that is closest to the second fluid 34. This is accomplished because the plastic backup ring of a T-seal is energized against the backup ring 12 by an overlapping section of elastomer, and the pressure of the first fluid 32 acts through the overlapping elastomer as if the elastomer were a fluid. With other types of seals, such as flexing lip-type seals, the effective pressure boundary can be determined, but is not necessarily located at a groove wall. Another preferred type of seal for use as the inner balancing seal 18 and outer balancing seal 20 is the prior art face sealing cap seal, where a ring of elastomer is axially compressed against a ring of plastic that bridges/seals the interface between the backup ring 12 and the bulkhead housing 16.

The retainer seal 22 is comprised of sealing material, can take any suitable form, and establishes a sealed relationship between the retainer 14 and the bulkhead housing 16 to prevent the escape of the first fluid 32 into the second fluid 34, and to isolate the ring outer surface 42 of the backup ring 12 from the pressure of the first fluid 32. The retainer seal 22 is preferably mounted in a retainer seal groove 96 that is cut/formed into the cavity bore 78 of the bulkhead housing 16, however arrangements are possible where the retainer seal groove 96 would be cut into the retainer 14. The retainer seal 22 establishes the outer boundary of a retainer sealed area called the "retainer hydraulic area" that is exposed to the differential pressure that results from the pressure of the first fluid 32 being greater than the pressure of the second fluid 34. The inner boundary of this retainer hydraulic area is established at the first outer sealing site 112 that is established between the retainer 14 and the backup ring 12. Differential pressure acting on the retainer hydraulic area creates an axial force on the retainer 14 that helps to hold the spacer nose 60 of the retainer 14 against the locating shoulder 80 of the bulkhead housing 16, and also helps to prevent the external threads 74 of the retainer 14 from unthreading from the internal threads 76 of the bulkhead housing 16. Notice that the axial placement of the retainer seal 22 causes the entire length of the retainer 14 to be radially pressure balanced. Everywhere the interior of the retainer 14 is exposed to the pressure of the first fluid 32, the exterior of the retainer 14 is also exposed to the pressure of the first fluid 32. Everywhere the interior of the retainer 14 is exposed to the pressure of the second fluid 34, the exterior of the retainer 14 is also exposed to the pressure of the second fluid 34.

The retainer seal 22 is preferably located at least partially within the retainer seal groove 96 which preferably holds the retainer seal 22 in radial compression against the retainer sealing surface 72. The retainer seal groove 96 preferably incorporates a groove wall, known herein as the supporting wall 97, which supports the retainer seal 22 against the differential pressure between the first fluid 32 and the second fluid 34. The supporting wall 97 is preferably substantially aligned with the first ring end 36 of the backup ring 12 in the axial direction, so that the retainer 14 is substantially pressure balanced in the radial direction along its entire length. For the purposes of this specification, the supporting wall 97 being substantially aligned with the first ring end 36 of the backup ring 12 can be achieved by having the supporting wall 97 in approximate alignment with the retaining shoulder 62 of the retainer 14, if desired, since the possible clearance between the retaining shoulder 62 of the retainer 14 and the first ring end 36 of the backup ring 12 is intentionally quite small.

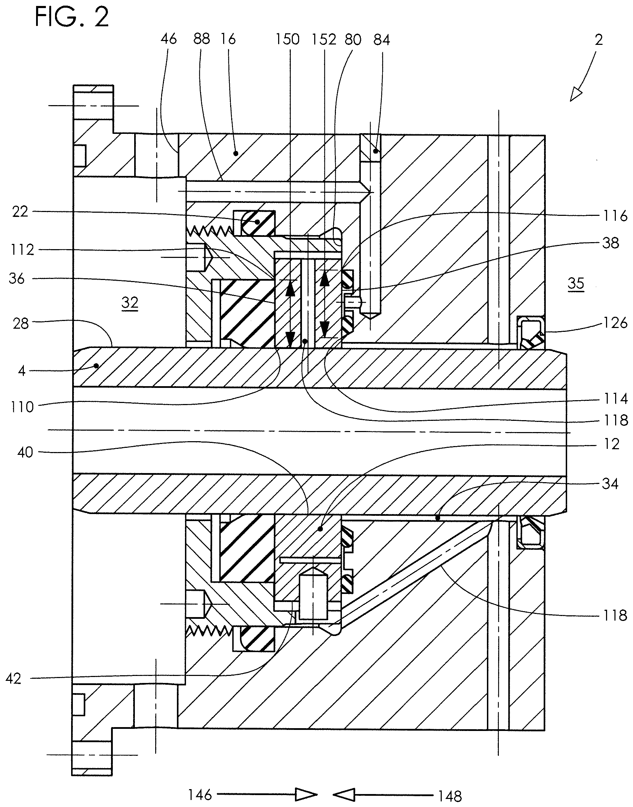

The housing seal 24 is comprised of sealing material, can take any suitable form, and establishes a sealed relationship between the bulkhead housing 16 and the housing bore 44 of the machine housing 6 to prevent the escape of the first fluid 32 into the second fluid 34. Simplifications are possible where the housing seal 24 and seal groove 98 are eliminated by merging the machine housing 6 and the bulkhead housing 16 into a single component, as shown by FIG. 2. As illustrated in Fig. 1, the sealed engagement between the housing seal 24 and the housing bore 44 of the machine housing 6 establishes the outer boundary of a bulkhead sealed area that is exposed to the differential pressure between the first fluid 32 and the second fluid 34. The inner boundary of the bulkhead sealed area is established by the sealing engagement between the dynamic sealing surface 50 of the dynamic seal 10 and the sealing surface 28 of the shaft 4.

The differential pressure between the first fluid 32 and the second fluid 34 acting on this bulkhead sealed area creates an axial force on the bulkhead housing 16 that helps to hold the bulkhead housing 16 squarely against the support shoulder 48 of the machine housing 6. This differential pressure driven axial force produces friction between the bulkhead housing 16 and the machine housing 6 which serves to prevent relative rotation between the bulkhead housing 16 and the machine housing 6 in the event that relative rotation between the shaft 4 and the bulkhead housing 16 occurs.

Although the housing seal 24 is preferably mounted in a seal groove 98 that is cut into the bulkhead housing 16, arrangements are possible where the seal groove 98 would be cut into the machine housing 6 and engage a mating surface of the bulkhead housing 16. Although the housing seal 24 is illustrated as a radial seal, arrangements are possible where the seal groove 98 is cut into the support shoulder 48 or the mating bulkhead end surface 102, such that the housing seal 24 is deployed in face sealing fashion between the bulkhead housing 16 and the machine housing 6. Alternatively, there could be two housing seals, one a radial seal as shown, and one a face seal as described. Alternatively, the housing seal 24 could be squeezed between the beveled end 122 of the bulkhead housing 16 and the internal comer 124 of the machine housing 6. Examples of seal options for retainer seal 22 and housing seal 24 include but are not limited to O-rings, square rings, O-ring energized lip seals, O-rings with backup rings, cap seals, and T seals.

The backup ring 12 is positioned in supporting engagement with the dynamic seal 10, and is interposed between the dynamic seal 10 and the locating shoulder 80 of the bulkhead housing 16. The backup ring 12 preferably does not rotate freely relative to the retainer 12 and the bulkhead housing 16.

The anti-rotation tang 26 is illustrated as a radially-oriented pin that engages a pin recess 108 of the backup ring 12 and engages the anti-rotation pocket 66 of the retainer 14. The anti-rotation tang 26 could be an integral part of the backup ring 12 that engages the anti-rotation pocket 66 of the retainer 14 in the same manner, and serves the same purpose of preventing the backup ring 12 from rotating as a result of any relative rotation between the backup ring 12 and the shaft 4. No anti-rotation tang 26 is required if little or no relative rotation occurs between the backup ring 12 and the shaft 4.

If desired, an anti-rotation dog 104 can provide anti-rotation engagement between the machine housing 6 and the bulkhead housing 16 to prevent relative rotation between the machine housing 6 and the bulkhead housing 16. The anti-rotation dog 104 is illustrated as an axially-oriented pin that engages dog recesses 106 in the machine housing 6 and the bulkhead housing 16. The anti-rotation dog 104 could be an integral projection from the bulkhead end surface 102 of the bulkhead housing 16 that engages a dog recess 106 in the support shoulder 48 of the machine housing 6. Alternatively, the anti-rotation dog 104 could be an integral projection from the support shoulder 48 of the machine housing 6 that engages a dog recess 106 in the bulkhead end surface 102 of the bulkhead housing 16. Alternatively, the anti-rotation dog 104 could be radially-oriented. The anti-rotation dog 104 is not needed if little or no relative rotation exists between the shaft 4 and the bulkhead housing 16, or if sufficient friction exists between the bulkhead housing 16 and the machine housing 6 to prevent relative rotation.

Sealing material bridges the radial clearance between the ring inner surface 40 of the backup ring 12 and the sealing surface 28 of the shaft 4 at the first inner sealing site 110, and sealing material also bridges the axial clearance between the retaining shoulder 62 of the retainer 14 and the first ring end 36 of the backup ring 12 at first outer sealing site 112. The radial location of the first inner sealing site 110 is at the sealing surface 28 of the shaft 4.

In FIG. 1, the sealing material at both the first inner sealing site 110 and the first outer sealing site 112 is provided by a single seal; the dynamic seal 10. Other arrangements are possible without departing from the spirit or scope of the invention. For example, the sealing material at the first inner sealing site 110 could be provided by the dynamic seal 10 and the sealing material at the first outer sealing site 112 could be provided by a separate face seal that could be implemented between the retaining shoulder 62 of the retainer 14 and the first ring end 36 of the backup ring 12, as shown by FIG. 7. This would allow the option of having the gland bore 68 be established by the backup ring 12 instead of by the retainer 14, which would allow the option for the pressure passage 88' to communicate in a generally axial direction through the backup ring 12, as shown by FIG. 7.

A second inner sealing site 114 is present at the interface between the second ring end 38 of the backup ring 12 and the locating shoulder 80 of the bulkhead housing 16. This second inner sealing site 114 is located at the inner wall of the inner seal groove 94.

A second outer sealing site 116 is present at the interface between the second ring end 38 of the backup ring 12 and the locating shoulder 80 of the bulkhead housing 16. This second outer sealing site 116 is located at the outer wall of the outer seal groove 92. Sealing material provided by the inner balancing seal 18 bridges/seals at the second inner sealing site 114, and sealing material provided by the outer balancing seal 20 bridges/seals at the second outer sealing site 116. The first inner sealing site 110, the first outer sealing site 112, the second inner sealing site 114, and the second outer sealing site 116 each seal/partition the pressure of the first fluid 32 from the pressure of the second fluid 34.

The slight difference between the axial length of the spacer section 58 and the captured axial length of the backup ring 12 controls the axial clearance between the first ring end 36 of the backup ring 12 and the retaining shoulder 62 of the retainer 14, and also controls the axial clearance between the second ring end 38 of the backup ring 12 and the locating shoulder 80 of the bulkhead housing 16, and preferably minimizes these axial clearances so that the extrusion gaps at the first outer sealing site 112, the second inner sealing site 114, and the second outer sealing site 116 are minimal. The axial length of the spacer section 58 relative to the captured axial length of the backup ring 12 is also one of the factors that controls the axial compression of the inner balancing seal 18 and the outer balancing seal 20, so that this compression can be minimized to minimize sliding friction at the locations where the inner balancing seal 18 and the outer balancing seal 20 are axially compressed against the backup ring 12.

For the purposes of this specification, the axial locations of the first inner sealing site 110 and the first outer sealing site 112 are at the first ring end 36 of the backup ring 12. For the purposes of this specification, the axial locations of the second inner sealing site 114 and the second outer sealing site 116 are at the second ring end 38 of the backup ring 12. For the purposes of this specification the radial location of the first inner sealing site 110 is at the sealing surface 28 of the shaft 4.

The pressure of the first fluid 32 acts over a first hydraulic area between the first inner sealing site 110 and the first outer sealing site 112, and imposes a first axially-acting hydraulic force on the first ring end 36 of the backup ring 12, acting in a first hydraulic force direction 146 that is oriented toward the locating shoulder 80 of the bulkhead housing 16.

The pressure of the first fluid 32 also acts over a second hydraulic area between the second inner sealing site 114 and the second outer sealing site 116, and imposes a second axially-acting hydraulic force on the second ring end 38 of the backup ring 12, acting in a second hydraulic force direction 148 oriented toward the retaining shoulder 62 of the retainer 14. The first hydraulic force direction 146 and the second hydraulic force direction 148 are oppositely oriented with respect to one another, and act in opposed generally axial directions.

It is preferred that the first and second hydraulic areas be substantially equal, so that the first and second axially acting hydraulic forces are substantially equal, and substantially cancel one another out, so that the net axially-acting hydraulic force acting on the backup ring 12 is negligible, leaving the backup ring 12 free to translate laterally with any relative lateral movement between the shaft 4 and the bulkhead housing 16. If desired, a slight axial force imbalance can intentionally be created to offset axial force factors such as the weight of the backup ring 12, or the axially-acting compressive force of the inner balancing seal 18 and outer balancing seal 20. If desired, a slight axial force imbalance can intentionally be created in the first hydraulic force direction 146 to ensure that no extrusion gap exists at the planar interface between the backup ring 12 and the bulkhead housing 16, to prevent differential pressure-related extrusion damage to the inner balancing seal 18 and outer balancing seal 20. Alternately, if desired, a slight axial force imbalance can intentionally be created in the second hydraulic force direction 148 to ensure that no extrusion gap exists at the planar interface between the backup ring 12 and the retainer 14, to prevent differential pressure related extrusion damage at the first outer sealing site 112. These slight but intentional axial force imbalances fall within the meaning of the description of the first and second axially-acting hydraulic forces being substantially equal. Additionally, the slight but unintentional axial force imbalances that may occur as the result of design tolerances fall within the meaning of the description of the first and second axially-acting hydraulic forces being substantially equal.

The retainer sealing surface 72 is larger than, and radially outward from, the first outer sealing site 112, producing a sealed area therebetween. For the purposes of this specification, the sealed area between the retainer sealing surface 72 and the first outer sealing site 112 is called the "retainer hydraulic area." The pressure of the first fluid 32 also acts over the retainer hydraulic area between the retainer sealing surface 72 and the first outer sealing site 112 to create a hydraulic force acting on the retainer 14 in the first hydraulic force direction 146. This hydraulic force helps to maintain the spacer nose 60 in contact with the locating shoulder 80, and helps to prevent the retainer 14 from unthreading from the bulkhead housing 16 during normal operating conditions when the pressure of the first fluid 32 is greater than the pressure of the second fluid 34.

At least one pressure port 118' is preferably included to communicate the pressure of the second fluid 34 to the ring outer surface 42 of the backup ring 12, so that the pressure of the second fluid 34 acts on the ring outer surface 42. Since the pressure of the second fluid 34 also acts on the ring inner surface 40 of the backup ring 12, the backup ring 12 is radially pressure balanced, and therefore relatively immune to deformation (i.e., pressure breathing) that would otherwise result from radial pressure imbalance. This allows the clearance between the ring inner surface 40 of the backup ring 12 and the sealing surface 28 of the shaft 4 to be maintained to a smaller dimension than otherwise would be possible.

Because the ring outer surface 42 has a larger surface area than the ring inner surface 40, the radial pressure balance provided by the pressure port 118' does not equate to perfect radial force balance. In most cases, the radial force imbalance results in very little inward deformation of the backup ring 12 because small diameter rings are relatively stiff, and with large diameter rings the area of the ring outer surface 42 is more nearly equal to the area of the ring inner surface 40. If, however, one wishes to offset the radially inwardly acting force imbalance, the assembly can be designed, for example, as shown and described below in conjunction with FIG. 6.

In some cases, the pressure of the second fluid 34 is merely atmospheric pressure, or some other negligible pressure. In such cases, if desired as a simplification, the pressure port 118 may be omitted because atmospheric pressure can simply be trapped in the region surrounding the ring outer surface 42 of the backup ring 12 at the time of assembly. In such cases, the pressure applied the ring inner surface 40 is substantially equal to the pressure applied to the ring outer surface 42, even though the pressure port 118 has been omitted.

At least part of the ring inner surface 40 of the backup ring 12 is preferred to serve as a journal bearing to locate the backup ring 12 laterally by riding on the sealing surface 28 of the shaft 4, and it is preferred that all of the length of the ring inner surface 40 serve as a journal bearing. The length of the journal bearing portion of the ring inner surface 40 is preferably sized adequately to handle the force required to overcome frictional forces that may exist between that backup ring 12 and mating components such as, but not limited to, the inner balancing seal 18 and the outer balancing seal 20. The contact between the backup ring 12 and sealing material at various locations causes friction that must be overcome before the backup ring 12 can translate laterally in concert with any relative lateral motion between the shaft 4 and the bulkhead housing 16.

The portion of the sealing surface 28 of the shaft 4 that is aligned with the ring inner surface 40 of the backup ring 12 is exposed to the second fluid 34. The second fluid 34 is preferably a lubricant or a fluid with lubricating qualities, and the portion of the sealing surface 28 of the shaft 4 that faces the ring inner surface 40 of the backup ring 12 is preferably wetted by the second fluid 34. It is understood that the second fluid 34 can also be a partial vacuum. When the second fluid 34 is not a lubricant or a fluid with lubricating qualities, and not a liquid, it is preferred that the first fluid 32 be a lubricant or a fluid with lubricating qualities and it is preferred that the dynamic seal 10 be a hydrodynamic seal which has a hydrodynamic pumping action which pumps a small amount of the first fluid 32 into the region between the backup ring 12 and the shaft 4 in response to relative movement between the dynamic seal 10 and the shaft 4, providing lubrication for any tangential contact between the backup ring 12 and the sealing surface 28.

The portion of the sealing surface 28 that is axially aligned with the ring inner surface 40 but not in tangential contact with the backup ring 12 is exposed to the second fluid 34. When the sealing surface 28 has relative rotation with respect to the ring inner surface 40 of the backup ring 12, the rotational velocity drags a film of the second fluid 34 past the gradual convergence occurring adjacent to a location of tangential contact between the backup ring 12 and the sealing surface 28. This provides a hydrodynamic wedging action which provides lubrication within the location of contact between the backup ring 12 and the sealing surface 28, minimizing friction between the backup ring 12 and the sealing surface 28, minimizing heat generation, and minimizing wear of the backup ring 12 and the sealing surface 28.

In service, the sealing surface 28 of the shaft 4 may have relative lateral motion with respect to the bulkhead housing 16 due to factors such as runout, deflection, and vibration, causing the sealing surface 28 to tangentially contact the ring inner surface 40 of the backup ring 12. The assembly is preferably configured such that this tangential contact causes the entire backup ring 12 to slide laterally in concert with the relative lateral motion between the sealing surface 28 of the shaft 4 and the bulkhead housing 16.

This tangential contact may cause the backup ring 12 to deform to a somewhat elliptical shape, but because of the tight initial fit between the ring inner surface 40 and the sealing surface 28, the extrusion gap remains small at the location 180° opposite to the initial tangential contact.

Because of the tangential nature of any contact between the sealing surface 28 and the ring inner surface 40 of the backup ring 12, the circumferentially converging shapes of the backup ring 12 and the sealing surface 28 cause the location of contact between the backup ring 12 and the sealing surface 28 to be hydrodynamically lubricated by the second fluid 34 when any relative rotation exists between the sealing surface 28 of the shaft 4 and the ring inner surface 40 of the backup ring 12, in the same manner as a journal bearing receives hydrodynamic lubrication due to shapes that gradually converge to the location of tangency. In essence, the ring inner surface 40 of the backup ring 12 forms a journal bearing that locates the backup ring 12 relative to the sealing surface 28 of the shaft 4.

The circumferential convergence between the ring inner surface 40 of the backup ring 12 and the sealing surface 28 of the shaft 4 to the point of tangency, forms a hydrodynamic inlet that is responsive to any relative rotation if the sealing surface 28 is exposed to a fluid having lubricating properties. Upon relative rotation between the backup ring 12 and the sealing surface 28, the hydrodynamic inlet wedges the lubricant between the backup ring 12 and the sealing surface 28 for lubrication purposes. The gradually converging geometry promotes a strong hydrodynamic action in response to relative rotation that wedges a lubricant film of a predictable magnitude into the location of tangential contact between the ring inner surface 40 of the backup ring 12 and the sealing surface 28 of the shaft 4 in response to relative rotation. This lubricant film helps to reduce friction, wear, and motion-generated heat, while permitting operation at higher speeds than otherwise would be possible with a non-hydrodynamic backup ring. An example of a non-hydrodynamic backup ring would be one that contacts the relatively rotatable surface around its entire circumference, such as the backup ring on a GT seal, also known as a T-seal.

The ring inner surface 40 of the backup ring 12 is preferably substantially a circular cylinder, although it is understood that in large diameters, internal material stresses may cause the ring 12 to be slightly non-circular or an elliptic cylinder even though it was originally machined to be a circular cylinder. When such slightly elliptical rings 12 are assembled, they may have two locations of generally tangential contact with the sealing surface 28. Both locations of generally tangential contact are hydrodynamically lubricated with the second fluid 34 when relative rotation exists between the sealing surface 28 and the backup ring 12, owing to the circumferentially converging shapes of the backup ring 12 and the sealing surface 28.

If desired, the radial thickness between the ring inner surface 40 and the ring outer surface 42 can vary around the circumference of the backup ring 12, causing the local stiffness of the backup ring 12 to vary around its circumference, so that factors such as, but not limited to, the previously described radial force imbalance can cause the ring inner surface 40 to undulate in a manner conducive to relative rotation-driven hydrodynamic lubrication at the interface between the backup ring 12 and the shaft 4. This radial thickness variation is best accomplished by providing the ring outer surface 42 with a castellated shape. Optionally, but not shown here, one of the projections forming the castellated shape could serve as an integral anti-rotation tang for anti-rotation purposes if desired. Alternately, or in conjunction with the castellated shape, the radial stiffness can be varied by a pattern of radial or axial blind or through weakening holes 170 in the backup ring 12. If desired, one or more of these weakening holes 170 can serve as the pin recess 108 or the pressure port 118, since the pin recess 108 and the pressure port 118 serve as weakening holes, causing the backup ring 12 to have variable stiffness around its circumference. This variable stiffness arrangement is particularly useful where factors such as thermal growth of the shaft 4 or radial force imbalance may sometimes cause the in service diameters of the ring inner surface 40 of the backup ring 12 and the sealing surface 28 of the shaft 4 to more or less equal one another. For example, if thermal or pressure expansion of the sealing surface 28 of the shaft 4 causes the shaft 4 to stretch the backup ring 12, the variable stiffness arrangement will cause the ring inner surface 40 of the backup ring 12 to undulate in a manner conducive to relative rotation-driven hydrodynamic lubrication at the sliding rotational interface between the backup ring 12 and the shaft 4, creating a film of the second fluid 34 that separates the ring inner surface 40 of the backup ring 12 from the sealing surface 28 of the shaft 4. The variable stiffness arrangement is particularly useful when the diameters of the sealing surface 28 of the shaft 4 and the ring inner surface 40 of the backup ring 12 are large, making them more prone to differential thermal expansion-induced contact, and making the backup ring 12 more flexible in the event of any such contact.

Figure 1A is an axonometric view of the same backup ring 12 that is shown in FIG. 1. Specifically, FIG. 1A is an axonometric view of the CAD solid model of the backup ring 12 that is included in the solid model assembly that is the basis for the cross-section of FIG. 1.

The radial thickness between the ring inner surface 40 and the ring outer surface 42 varies around the circumference of the backup ring 12. One way of accomplishing the variations in thickness is by providing the ring outer surface 42 with a castellated shape, as shown. The variations in radial thickness cause corresponding variations of stiffness around the circumference of the backup ring 12. Another way to cause variations in stiffness around the circumference of the backup ring 12 is with a pattern of axial and/or radial weakening holes 170. FIG. 1A shows both axial and radial varieties of weakening holes 170. In reality, the recesses that cause the radial thickness of the backup ring 12 to vary are another variation of weakening hole. If desired, one of the radial weakening holes 170 can serve as the pin recess for holding the anti-rotation tang, if desired. When the backup ring 12 is stressed by factors such as radial force imbalance or stretching due to thermal or pressure growth of the shaft, the ring inner surface 40 undulates in a manner conducive to relative rotation-driven hydrodynamic lubrication.

In Figure 2, a longitudinal cross-sectional view of a sealed machine assembly is shown generally at 2. FIG. 2 illustrates a simplification of the FIG. 1 arrangement, where features of the machine housing 6 of FIG. 1 have been included in the bulkhead housing 16, such that the bulkhead housing 16 of FIG. 2 serves the functions of both of the FIG. 1 components. This simplification allows the housing seal 24 and anti-rotation dog 104 of FIG. 1 to be eliminated, along with various surfaces of the machine housing 6 and bulkhead housing 16 that are illustrated in FIG. 1.

A first hydraulic area 150 is established between the first inner sealing site 110 and the first outer sealing site 112, and a second hydraulic area 152 is established between the second inner sealing site 114 and the second outer sealing site 116. As with FIG. 1, in FIG. 2 the first inner sealing site 110 is separated from the second inner sealing site 114 by an axial distance; the first outer sealing site 112 is separated from said second outer sealing site 116 by an axial distance; and the axial distance separating the first inner sealing site 110 from the second inner sealing site 114 is illustrated as being substantially equal to the axial distance separating the first outer sealing site 112 is from the second outer sealing site 116. As described below in conjunction with FIG. 6, if desired in FIG. 2 the axial distance separating the first inner sealing site 110 from the second inner sealing site 114 could be less than the axial distance separating the first outer sealing site 112 from the second outer sealing site 116, if such a complexity were considered desirable to improve radial force balance.

The pressure passage 88 for communicating the pressure of the first fluid 32 to the second hydraulic area 152 is illustrated as a cross-drilled hole arrangement, but could take other suitable forms. For example, the pressure passage 88 could be an external hose connecting a fluid port 46 with an axially-oriented port leading to the second hydraulic area 152. A plug 84 is used to prevent leakage from the cross-drilled hole arrangement of the pressure passage 88. The plug 84 can be of any suitable type, such as a threaded plug, a weld plug, or a friction plug.

The pressure of the first fluid 32 acts over the first hydraulic area 150, and imposes a first axially-acting hydraulic force on the first ring end 36 of the backup ring 12, acting in a first hydraulic force direction 146. The pressure of the first fluid 32 also acts over the second hydraulic area 152, and imposes a second axially-acting hydraulic force on the second ring end 38 of the backup ring 12, acting in a second hydraulic force direction 148. The first hydraulic force direction 146 and the second hydraulic force direction 148 are oppositely oriented with respect to one another, and act in opposed generally axial directions.

It is preferred that the first hydraulic area 150 and the are second hydraulic area 152 be substantially equal, so that the first and second axially-acting hydraulic forces are substantially equal, and substantially cancel one another out, so that the net axially-acting hydraulic force acting on the backup ring 12 is negligible, leaving the backup ring 12 free to translate laterally with any relative lateral movement between the shaft 4 and the bulkhead housing 16.

One or more pressure ports 118' are preferably included to communicate the pressure of the second fluid 34 to the ring outer surface 42 of the backup ring 12, so that the pressure of the second fluid 34 acts on the ring outer surface 42. Since the pressure of the second fluid 34 also acts on the ring inner surface 40 of the backup ring 12, the backup ring 12 is radially pressure balanced, and therefore substantially immune to deformation (i.e., pressure breathing) that would otherwise result from radial pressure imbalance. This allows the clearance between the ring inner surface 40 of the backup ring 12 and the sealing surface 28 of the shaft 4 to be maintained to a smaller dimension than otherwise possible.

If desired, an outboard seal 126 can be used to separate the second fluid 34 from a third fluid 35. If desired, the pressure of the second fluid 34 can be less than the pressure of the first fluid 32 and greater than the pressure of the third fluid 35.

As with FIG. 1, in FIG. 2 the first ring end 36 and the second ring end 38 of the backup ring 12 are illustrated as substantially flat surfaces, and the first ring end 36 is illustrated as being substantially parallel to the second ring end 38.

As a simplification, the outboard seal 126 can be omitted, and the second fluid can simply be atmosphere. In such cases, a radial hole (not shown) through the wall of the bulkhead housing 16 in the region between the retainer seal 22 and the locating shoulder 80 could be used to bring the pressure of the second fluid to the ring outer surface 42.

As with FIG. 1, in FIG. 2 the backup ring 12 preferably has a bearing relationship with the shaft 4, and preferably the ring inner surface 40 of the backup ring 12 establishes a journal bearing-type relationship with the shaft 4, locating the backup ring 12 radially/laterally with respect to the shaft 4.

In Figure 3, a longitudinal cross-sectional view of a sealed machine assembly is shown generally at 2. FIG. 3 illustrates a simplification of the FIG. 1 arrangement, where the inner balancing seal 18, outer balancing seal 20, inner seal groove 94, outer seal groove 92, and pressure passage 88 of FIG. 1 have been eliminated. This simplified embodiment gives up the axial force balancing of the backup ring 12 that is provided for in the FIG. 1 arrangement, but retains the radial pressure balancing of the backup ring 12 that is provided for in the FIG. 1 arrangement.

As with FIGS. 1 and 2, in FIG. 3 a backup ring 12 of generally circular form is located between a retaining shoulder 62 of a retainer 14 and a locating shoulder 80 of a bulkhead housing 16, and has a first ring end 36 with at least a portion thereof facing the retaining shoulder 62 and a second ring end 38 having at least a portion thereof facing the locating shoulder 80, the first ring end 36 and the second ring end 38 facing in generally opposite directions, the backup ring 12 having a ring inner surface 40 facing generally inward toward the sealing surface 28 of the shaft 4 and establishing an extrusion gap clearance therewith, and having a ring outer surface 42 facing generally radially outward, the ring inner surface 40 and the ring outer surface 42 both being exposed to the pressure of the second fluid 34.

The FIG. 3 arrangement is advantageous where it is desired or acceptable for the backup ring 12 to be free to align itself on the sealing surface 28 of the shaft 4 in conditions of low differential pressure, and where it is desired or acceptable for the second ring end 38 of the backup ring 12 to have high, differential pressure-induced friction with the locating shoulder 80 of the bulkhead housing 16 in conditions of high differential pressure. For example, the shaft 4 could be a prior art axially force-balanced, floating washpipe of an oilfield washpipe assembly, such as that shown by washpipe 66 in FIG. 1 of commonly assigned U.S. Patent 6007105, entitled "Swivel Seal Assembly." At the time of assembly, steps may be taken to align the shaft 4 coaxially with a separate rotatable power swivel or top drive shaft that shaft 4 would be attached to, and during this alignment step the backup ring 12 would be free to move laterally with the shaft 4. During high pressure rotary service, the differential pressure would be high, causing high friction between the second ring end 38 of the backup ring 12 and the locating shoulder 80 of the bulkhead housing 16. This arrangement allows the ring inner surface 40 of the backup ring 12 to serve as a radial bearing that provides radial guidance to the part of the shaft 4 encircled by the backup ring 12 during conditions of high differential pressure, while still retaining immunity from dimensional changes associated with radial pressure imbalance.

One or more pressure ports 118' are preferably included to communicate the pressure of the second fluid 34 to the ring outer surface 42 of the backup ring 12, so that the pressure of the second fluid 34 acts on the ring outer surface 42. Since the pressure of the second fluid 34 also acts on the ring inner surface 40 of the backup ring 12, the backup ring 12 is radially pressure balanced, and therefore substantially immune to deformation (i.e., pressure breathing) that would otherwise result from radial pressure imbalance. This allows the clearance between the ring inner surface 40 of the backup ring 12 and the sealing surface 28 of the shaft 4 to be maintained to a smaller, more stable dimension than otherwise possible, which helps to minimize the extrusion damage experienced by the dynamic seal 10.

As with FIG. 1, in FIG. 3 the spacer section 58 incorporates an anti-rotation pocket 66, and an anti-rotation tang 26 projecting from the backup ring 12 engages the anti-rotation pocket 66 to prevent relative rotation between the backup ring 12 and the retainer 14. It is to be understood that, throughout this specification, the lateral dimension of the anti-rotation pocket 66 is preferably larger than the mating lateral dimension of the radially-oriented anti-rotation tang 26, to allow the anti-rotation tang 26 to articulate within the anti-rotation pocket 66 as the backup ring 12 experiences the slight rotational oscillation that must necessarily occur as the backup ring 12 follows lateral shaft motion such as dynamic runout.

As in FIG. 1, in FIG. 3 the bulkhead housing 16 is located at least partially within a machine housing 6, and a housing seal 24 establishes sealing between the bulkhead housing 16 and the machine housing 6 and partitions the pressure of the first fluid 32 from the pressure of the second fluid 34.

If desired, an outboard seal 126 can be used to establish sealing between the machine housing 6 and the shaft 4, and can be used to separate/partition the second fluid 34 from a third fluid 35. As with FIG. 1, in FIG. 3 the pressure of the first fluid 32 may, if desired, be greater than the pressure of the second fluid 34, and the pressure of the second fluid 34 may, if desired, be greater than the pressure of the third fluid 35.

As with FIG. 1, in FIG. 3 an anti-rotation dog 104 may be employed to engage dog recesses 106 in the bulkhead housing 16 and the machine housing 6. As with FIG. 1, in FIG. 3 the machine housing 6 may have a fluid port 46, the pressure of the first fluid 32 may be supplied through the fluid port 46, and the first fluid 32 may be circulated through the fluid port 46. As with FIG. 1, in FIG. 3 the machine housing 6 may have one or more outboard ports 128, the pressure of the second fluid 34 may be supplied through such an outboard port 128, and the second fluid 34 may circulate through the outboard port 128.

As with FIG. 1, in FIG. 3 the shaft 4 and the backup ring 12 may have relative axial motion with respect to each other, may have relative rotation with respect to each other, and may have both relative rotation and relative axial motion with respect to each other. As with FIG. 1, in FIG. 3 the shaft 4 and the bulkhead housing 16 may have relative radial motion with respect to each other, and in such cases the backup ring 12 follows the relative radial motion and has relative radial motion with respect to the bulkhead housing 16 and the retainer 14. As with FIG. 1, in FIG. 3 the backup ring 12 preferably has a bearing relationship with the shaft 4, and preferably the ring inner surface 40 of the backup ring 12 establishes a journal bearing-type relationship with the shaft 4. As with FIG. 1, in FIG. 3 the backup ring 12 is preferably comprised of metal. As with FIG. 1, in FIG. 3 the retainer 14 is illustrated as being threadedly retained to the bulkhead housing 16. As with FIG. 1, in FIG. 3 the retainer 14 provides a gland bore 68 of generally cylindrical form, and a dynamic seal 10 is located at least partially within the gland bore 68. As with FIG. 1, in FIG. 3 the dynamic seal 10 has a static sealing surface 52 that is held in sealing contact with the gland bore 68, and has a dynamic sealing surface 50 in sealing contact with the sealing surface 28 of the shaft 4. As with FIG. 1, in FIG. 3 the dynamic seal 10 has a first seal end 54 exposed to the first fluid 32, and has a second seal end 56 facing and in contact with said first ring end 36 of said backup ring 12. As with FIG. 1, in FIG. 3 the dynamic seal 10 provides the sealing material establishing the first inner sealing site 110.

As with FIG. 1, in FIG. 3 the dynamic seal 10 includes a lubricant side flank 129 that is exposed to the first fluid 32, and is sloped relative to the sealing surface 28 of the shaft 4, providing gradual convergence with the sealing surface 28 of the shaft 4, thus forming a hydrodynamic inlet that introduces a lubricating film of the first fluid 32 between the dynamic sealing surface 50 and the sealing surface 28 in response to relative motion between the dynamic seal 10 and the sealing surface 28 of the shaft 4. As with FIG. 1, in FIG. 3 the dynamic seal 10 provides the sealing material establishing the first outer sealing site 112.

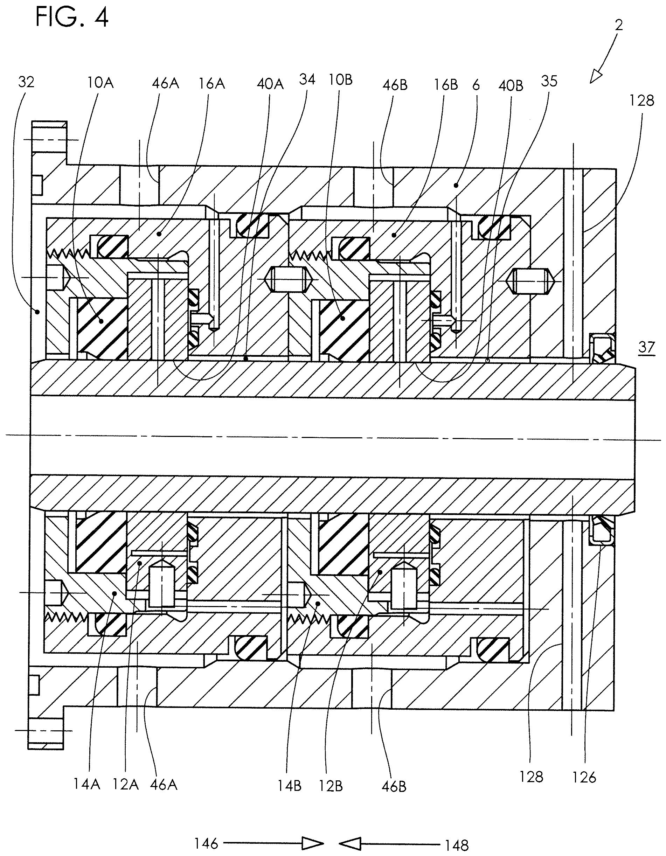

In Figure 4, a longitudinal cross-sectional view of a sealed machine assembly is shown generally at 2. FIG. 4 illustrates how the sealing assembly 8 of FIG. 1 can be employed in tandem to accomplish pressure staging and/or redundancy. FIGS. 1 and 2 can be considered simplifications of FIG. 4, but were included ahead of FIG. 4 to more concisely convey basic geometry and operating principles. A first dynamic seal 10A separates a first fluid 32 from a second fluid 34. A second dynamic seal 10B separates the second fluid 34 from a third fluid 35. If desired, an outboard seal 126 can separate the third fluid 35 from a fourth fluid 37, such as the atmosphere.

A first backup ring 12A is captured within a first bulkhead housing 16A by a first retainer 14A. A second backup ring 12B is captured within a second bulkhead housing 16B by a second retainer 14B. The first backup ring 12A and the second backup ring 12B are radially pressure balanced and axially force balanced in the same manner described in conjunction with FIG. 1.

The first dynamic seal 10A and second dynamic seal 10B of FIG. 4 are identical to the dynamic seal 10 of FIG. 1. The first backup ring 12A and second backup ring 12B of FIG. 4 are identical to the backup ring 12 of FIG. 1. The first retainer 14A and second retainer 14B of FIG. 4 are identical to the retainer 14 of FIG. 1. The first bulkhead housing 16A and second bulkhead housing 16B of FIG. 4 are identical to the bulkhead housing 16 of FIG. 1.

If desired for pressure staging purposes, the pressure of the second fluid 34 can be less than the pressure of the first fluid 32, so that the differential pressure acting across the first dynamic seal 10A is less than the pressure of the first fluid 32. If desired for pressure staging purposes, the pressure of the third fluid 35 can be less than the pressure of the second fluid 34, so that the differential pressure acting across the second dynamic seal 10B is less than the pressure of the second fluid 34. If desired for pressure staging purposes, the pressure of the fourth fluid 37 can be less than the pressure of the third fluid 35, so that the differential pressure acting across the outboard seal 126 is less than the pressure of the third fluid 35.

If desired, the first fluid 32 may be supplied and/or pressurized via one or more fluid ports 46A of the machine housing 6, and if desired may be circulated in one fluid port 46A and out through another fluid port 46A. If desired, the second fluid 34 may be supplied and/or pressurized via one or more fluid ports 46B of the machine housing 6, and if desired may be circulated in one fluid port 46B and out through another fluid port 46B. If desired, the third fluid 35 may be supplied and/or pressurized via one or more outboard ports 128 of the machine housing 6, and if desired may be circulated in one outboard port 128 and out through another outboard port 128.

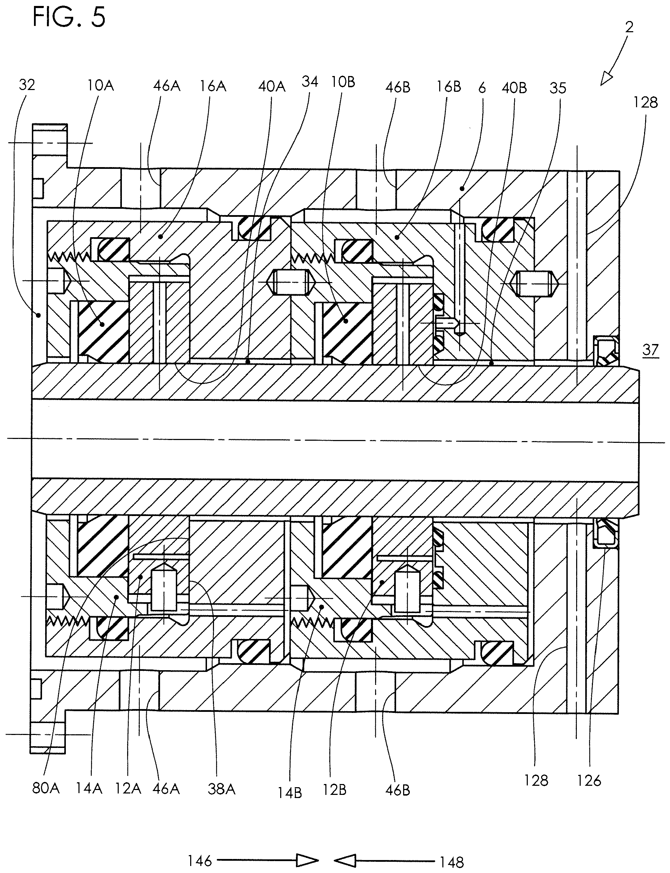

In Figure 5, a longitudinal cross-sectional view of a sealed machine assembly is shown generally at 2. FIG. 5 illustrates how the sealing assembly 8 of FIG. 1 can be employed in conjunction with the sealing assembly of FIG. 3 to accomplish pressure staging and/or redundancy. FIG. 5 can be considered a simplification of FIG. 4. A first dynamic seal 10A separates a first fluid 32 from a second fluid 34. A second dynamic seal 10B separates the second fluid 34 from a third fluid 35. If desired, an outboard seal 126 can separate the third fluid 35 from a fourth fluid 37, such as the atmosphere.

A first backup ring 12A is captured within a first bulkhead housing 16A by a first retainer 14A. A second backup ring 12B is captured within a second bulkhead housing 16B by a second retainer 14B. The first backup ring 12A and the second backup ring 12B are radially pressure balanced in the same manner described in conjunction with FIG. 1. Only the second backup ring 12B is axially force balanced in the same manner as described in conjunction with FIG. 1.

The first dynamic seal 10A and second dynamic seal 10B of FIG. 5 are illustrated as being identical to the dynamic seal 10 of FIG. 1. The first backup ring 12A and second backup ring 12B of FIG. 5 are identical to the backup ring 12 of FIG. 1. The first retainer 14A and second retainer 14B of FIG. 5 are identical to the retainer 14 of FIG. 1. The first bulkhead housing 16A of FIG. 5 is identical to the bulkhead housing 16 of FIG. 3, and lacks the inner seal groove 94, outer seal groove 92, and pressure passage 88 that are included in the bulkhead housing 16 of FIG. 1. The second bulkhead housing 16B of FIG. 5 is identical to the bulkhead housing 16 of FIG. 1.

If desired for pressure staging purposes, the pressure of the second fluid 34 can be less than the pressure of the first fluid 32, so that the differential pressure acting across the first dynamic seal 10A is less than the pressure of the first fluid 32. If desired for pressure staging purposes, the pressure of the third fluid 35 can be less than the pressure of the second fluid 34, so that the differential pressure acting across the second dynamic seal 10B is less than the pressure of the second fluid 34. If desired for pressure staging purposes, the pressure of the fourth fluid 37 can be less than the pressure of the third fluid 35, so that the differential pressure acting across the outboard seal 126 is less than the pressure of the third fluid 35.

If desired, the first fluid 32 may be supplied and/or pressurized via one or more fluid ports 46A of the machine housing 6, and if desired may be circulated in one fluid port 46A and out through another fluid port 46A. If desired, the second fluid 34 may be supplied and/or pressurized via one or more fluid ports 46B of the machine housing 6, and if desired may be circulated in one fluid port 46B and out through another fluid port 46B. If desired, the third fluid 35 may be supplied and/or pressurized via one or more outboard ports 128 of the machine housing 6, and if desired may be circulated in one outboard port 128 and out through another outboard port 128.

The backup ring 12A is free to align itself on the shaft 4 in conditions of low or no differential pressure acting across dynamic seal 10A. When the pressure of the first fluid 32 is significantly greater than the pressure of the second fluid 34 causing significant differential pressure across dynamic seal 10A, significant friction occurs between the second ring end 38A of the backup ring 12A and the mating locating shoulder 80A of the bulkhead housing 16A. This significant friction helps to hold the backup ring 12A in place, allowing the ring inner surface 40A of the backup ring 12A to serve as a radial bearing that provides radial guidance to a portion of the shaft 4 encircled by the backup ring 12A during conditions of high differential pressure, while still retaining immunity from dimensional changes associated with radial pressure imbalance. This arrangement is particularly useful in equipment such as washpipe swivels, where the shaft 4 is an axially force-balanced, floating washpipe and one end of the shaft 4 is controlled by a separate bearing (not shown).

In Figure 6, a longitudinal cross-sectional view of a sealed machine assembly is shown generally at 2. FIG. 6 is an alternate embodiment of the present invention. The housing seal 24 is installed in an open-ended groove, so that initial sealing is accomplished by radial compression against the housing bore 44 of the machine housing 6. This arrangement eliminates the extrusion gap of the housing seal 24 by virtue of the contact between bulkhead end surface 102 of the bulkhead housing 16 and the support shoulder 48 of the machine housing 6.

The exterior surface 90 of the bulkhead housing 16 is in relatively close proximity to the housing bore 44 of the machine housing 6, and rapid communication of the pressure of the first fluid 32 to the pressure passage 88 is ensured by an axial slot 138 along the exterior surface 90 of the bulkhead housing 16. The spacer section 58 is a separate component from the retainer 14, and the retainer 14 is secured in place by a locking ring 140 which incorporates the external threads 74. In other words, the locking ring 140 is threadedly engaged to the bulkhead housing 16, securing the retainer 14 in place relative to the bulkhead housing 16 and the spacer section 58. The spacer section 58 is a ring located at least partially within the bulkhead housing 16, having an indexing end 160 in contacting relation with the retaining shoulder 62 of the retainer 14. The pressure port 118 for communicating the pressure of the second fluid 34 to the space surrounding the ring outer surface 42 of the backup ring 12 is present in the bulkhead housing 16, and if preferred, may also be included in the backup ring 12. As with FIG. 1, in FIG. 6 the pressure port 118 that is incorporated into the backup ring 12 passes from the ring inner surface 40 to the ring outer surface 42, and the pressure port 118 communicates the pressure of the second fluid 34 to the ring outer surface 42, and the pressure port 118 that is incorporated into the bulkhead housing 16 also communicates the pressure of the second fluid 34 to the ring outer surface 42. As with FIG. 1, in FIG. 6 the bulkhead housing 16 incorporates a pressure passage 88 communicating the pressure of the first fluid 32 to the second hydraulic area that is located between and defined by the second inner sealing site 114 and the second outer sealing site 116, and the pressure passage 88 is a combination of intersecting holes, which are sometimes referred to as "cross-drilled holes." As with FIG. 1, in FIG. 6 a first hydraulic area is located between and defined by the first inner sealing site 110 and the first outer sealing site 112, and is preferably substantially equal in area to the second hydraulic area.

In the embodiment shown in FIG. 6, the higher pressure of the first fluid 32 is used to create a radially outwardly acting hydraulic force to counteract the radial force imbalance resulting from the pressure of the second fluid 34 acting on the differential surface area of the ring outer surface 42 and ring inner surface 40. The axial distance 156 between first inner sealing site 110 and second inner sealing site 114 is less than the axial distance 158 between first outer sealing site 112 and second outer sealing site 116, to address the potential radial force imbalance resulting from the larger area of the ring outer surface 42 being exposed to the same pressure as the smaller area of the ring inner surface 40. This axial length difference is illustrated as being accomplished by incorporating a bevel on the first ring end 36 of the backup ring 12, and by incorporating a step on the second ring end 38 of the backup ring 12. If desired, the length difference between the axial distance 156 and the axial distance 158 can be accomplished by any suitable means. For example, both the first ring end 36 and the second ring end 38 of the backup ring 12 could incorporate a step. For another example, the first ring end 36 could be substantially planar, the length difference being accomplished by a step incorporated only at the second ring end 38 of the backup ring 12. For another example, the second ring end 38 could be substantially planar, the length difference being accomplished by a step incorporated only at the first ring end 36 of the backup ring 12. For another example, the second ring end 38 could be substantially planar, the length difference being accomplished by a bevel incorporated only at the first ring end 36 of the backup ring 12. Referring to FIG. 6, the pressure of the first fluid 32 provides a radially outwardly acting hydraulic force acting on the backup ring 12 to compensate for the radial force imbalance imposed by the pressure of the second fluid acting on the backup ring 12. Whether or not this slight radially outwardly acting pressure imbalance is created to offset the described radial force imbalance, the design falls within the intended meaning of the backup ring 12 being substantially radially pressure balanced.

As a simplification, the outboard seal 126 and outboard port 128 of FIG. 1 have been eliminated.

In FIG. 1, the anti-rotation pocket 66 is illustrated as an axial slot. In FIG. 6, the anti-rotation pocket 66 is illustrated as a radial hole. The use of a hole rather than a slot allows the anti-rotation tang 26 to secure the backup ring 12 within the retainer 14 as the retainer 14 and backup ring 12 are inserted into the bulkhead housing 16, adding to the convenience of assembly.

In Figure 7, a longitudinal cross-sectional view of a sealed machine assembly is shown generally at 2. FIG. 7 is an alternate embodiment of the invention which also includes several simplifications.

The features of the machine housing 6 of FIG. 1 have been included in the bulkhead housing 16 of FIG. 7, such that the bulkhead housing 16 of FIG. 7 serves the functions of both of the FIG. 1 components. This simplification allows the housing seal 24 and anti-rotation dog 104 of FIG. 1 to be eliminated, along with various surfaces of the machine housing 6 and bulkhead housing 16 that are illustrated in FIG. 1. The pressure port 118 may pass through both the backup ring 12 and the bulkhead housing 16 as shown, if desired. The first inner sealing site 110 is bridged by the sealing material of the dynamic seal 10, and the first outer sealing site 112 is bridged by the sealing material of a face seal 142 mounted in an annular groove 144 that is shown to be cut into the retainer 14, but could just as easily be cut into the backup ring 12. The principal point is that the face seal 142 is in sealing contact with the retainer 14 and with the backup ring 12, and provides the sealing material establishing the first outer sealing site 112. This configuration allows the pressure passage 88' and the gland bore 68 to be incorporated as part of the backup ring 12. Having the pressure passage 88' in the backup ring 12 results in less complicated machining, compared to the cross-drilled pressure passage 88 of FIG. 1. The pressure passage 88' penetrates through the backup ring 12 from the first ring end 36 to the second ring end 38 communicating the pressure of the first fluid 32 to the second hydraulic area 152 that is located between and defined by the second inner sealing site 114 and the second outer sealing site 116.

The pressure passage 88 can be one of a pattern of pressure passages configured to serve as weakening holes if desired, providing the backup ring 12 with variations in stiffness around its circumference. The pin recess 108 can be one of a pattern of radial holes serving as weakinging holes, if desired, providing the backup ring 12 with variations in stiffness around its circumference. The radial thickness of the backup ring 12 between the ring inner surface 40 and the ring outer surface 42 can vary around the circumference of the backup ring 12 if desired, providing the backup ring 12 with variations in stiffness around its circumference. Such variations in stiffness around the circumference of the backup ring 12 cause hydrodynamic undulations to appear in the ring inner surface 40 as a result of backup ring stress caused by factors such as radial force imbalance causing the ring inner surface 40 to shrink, and such as thermal expansion of the shaft 4 causing the backup ring 12 to stretch, and such as pressure expansion of the shaft 4 causing the backup ring 12 to stretch.

The dynamic seal 10 has a dynamic sealing surface 50 in sealing contact with the sealing surface 28 of the shaft 4 and provides the sealing material establishing the first inner sealing site 110. The backup ring 12 provides the gland bore 68 having sealing contact with and surrounding at least part of the dynamic seal 10. The gland bore 68 is an internal surface of an annular projection 166 that projects from the first ring end 36, and this annular projection 166 may also include a gland wall 70' if desired. Incorporating the gland bore 68 as part of the backup ring 12 isolates the dynamic seal 10 from the radial compression changes that occur when lateral shaft motion occurs in the arrangement of FIG. 1. This makes the FIG. 7 arrangement more suitable for equipment with very large amounts of lateral shaft motion (such as rotating control devices), compared to the arrangement of FIG. 1.

The pressure of the first fluid 32 acts on an annular first hydraulic area established between the first inner sealing site 110 and the first outer sealing site 112, producing a first hydraulic force acting in a first hydraulic force direction 146. The pressure of the first fluid 32 also acts on an annular second hydraulic area established between the second inner sealing site 114 and the second outer sealing site 116, producing a second hydraulic force acting in a second hydraulic force direction 148. Preferably, the first and second hydraulic forces are substantially equal; i.e., substantially balanced.

As with FIG. 1, in FIG. 7 the spacer section 58 is an axially projecting feature of the retainer 14, and has a spacer nose 60 contacting the locating shoulder 80 of the bulkhead housing 16.

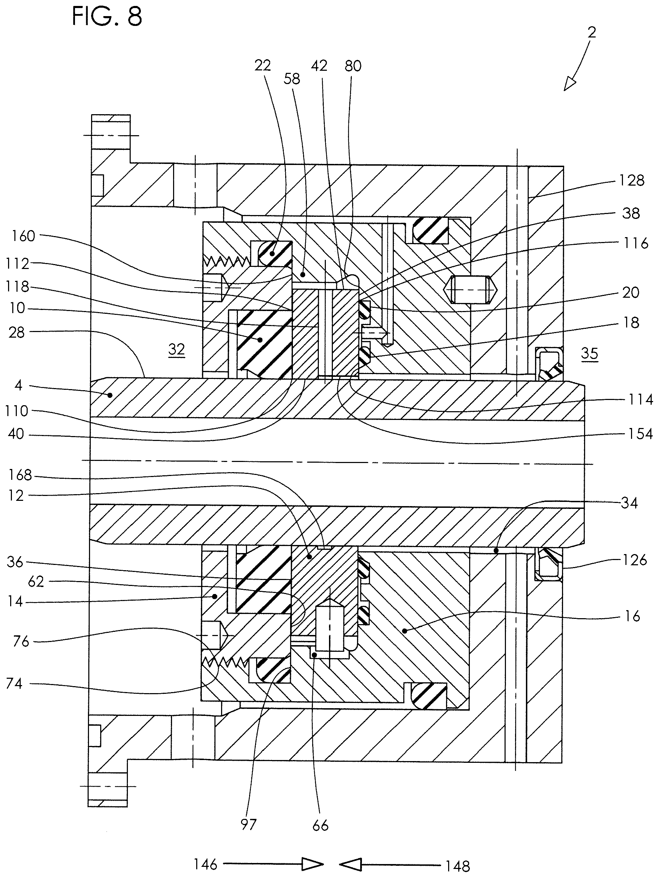

In Figure 8, a longitudinal cross-sectional view of a sealed machine assembly is shown generally at 2. FIG. 8 is an alternate embodiment of the present invention, wherein the backup ring 12, retainer 14, and bulkhead housing 16 have a different configuration, compared to FIG. 1. In FIG. 8 the spacer section 58 is an integral feature of the bulkhead housing 16, whereas in FIG. 1 the spacer section 58 is integral with the retainer 14. The spacer section 58 has an indexing end 160 in contacting relation with the retaining shoulder 62 of the retainer 14. The axial length of the spacer section 58 is slightly greater than the captured axial length of the backup ring 12, so that the axial distance between the retaining shoulder 62 of the retainer 14 and the locating shoulder 80 of the bulkhead housing 16 is greater than the mating captured axial length of the backup ring 12. The slight length difference between the spacer section 58 and the backup ring 12 ensures that the backup ring 12 is not clamped between the retaining shoulder 62 of the retainer 14 and the locating shoulder 80 of the bulkhead housing 16. The slight length difference between the spacer section 58 and the backup ring 12 ensures that the extrusion gap between the retaining shoulder 62 of the retainer 14 and the first ring end 36 of the backup ring 12 is small, to minimize pressure induced extrusion damage at the first outer sealing site 112. The slight length difference between the spacer section 58 and the backup ring 12 also ensures that the extrusion gap between the locating shoulder 80 of the bulkhead housing 16 and the second ring end 38 of the backup ring 12 is small, to minimize pressure induced extrusion damage at the second inner sealing site 114 and the second outer sealing site 116.

As with FIG. 1, in FIG. 8 a retainer seal 22 establishes sealing between and with the bulkhead housing 16 and the retainer 14, and partitions the pressure of the first fluid 32 from the pressure of the second fluid 34. The pressure of the first fluid 32 is preferably greater than the pressure of the second fluid 34. An advantage of the FIG. 8 arrangement is that the retainer seal 22 is not exposed to a radial extrusion gap between the bulkhead housing 16 and the retainer 14, because the retainer shoulder 62 is in contact with the indexing end 160. As with FIG. 1, in FIG. 8 the supporting groove wall 97 is in substantial axial alignment with the first ring end 36. This substantial axial alignment occurs by virtue of the supporting groove wall 97 being an outward continuation of the generally planar indexing end 160 which is aligned and in contact with the retaining shoulder 62 of the retainer 14. As is the case with FIG. 1, the spacer section 58 of FIG. 8 controls the axial location of the retaining shoulder 62 of the retainer 14 relative to the locating shoulder 80 of the bulkhead housing 16.

As is the case with FIG. 1, the backup ring 12 of FIG. 8 incorporates a pressure port 118 that penetrates from the ring inner surface 40 of the backup ring 12 to the ring outer surface 42. If desired, the pressure port 118 may be generally radially oriented, as shown. Unlike FIG. 1, the ring inner surface 40 of the backup ring 12 of FIG. 8 incorporates a pressure communication slot 154 for speedily communicating the pressure of the second fluid 34 to the pressure port 118. This pressure communication slot 154 is applicable to the backup rings shown in other figures herein, at the designer's discretion. For example, if the pressure communication slot 154 were to be incorporated on the backup ring 12 of FIG. 1, there would be little or no reason for the bulkhead housing 16 of FIG. 1 to incorporate a pressure port 118. Indeed, the bulkhead housing 16 of FIG. 8 does not incorporate the pressure port 118 that is shown in the bulkhead housing 16 of FIG. 1.

Unlike FIG. 1, in FIG. 8 the ring inner surface 40 includes an annular pressure distribution groove 168, and both the pressure port 118 and the pressure communication slot 154 open into the annular pressure distribution groove 168. This arrangement provides for the rapid distribution of the pressure of the second fluid 34 into the regions of tight clearance between the backup ring 12 and the shaft 4. Both the pressure communication slot 154 and the annular pressure distribution groove 168 are applicable to the backup ring 12 of FIG. 1, but were not included in FIG. 1 simply because of the extremely crowded nature of the annotations of FIG. 1. The pressure communication slot 154 and the annular pressure distribution groove 168 are also applicable to the backup rings shown in the other figures herein.

In FIG. 8, the anti-rotation pocket 66 is incorporated into the spacer section 58 of the bulkhead housing 16, whereas in FIG. 1 the anti-rotation pocket 66 is incorporated into the spacer section 58 of the retainer 14.

As with FIG. 1, in FIG. 8 sealing material establishes a first inner sealing site 110 sealing the extrusion gap clearance between the ring inner surface 40 and the sealing surface 28 of the shaft 4, and establishes a first outer sealing site 112 at the first ring end 36 sealing between the first ring end 36 and the retainer 14, and establishes a second inner sealing site 114 at the second ring end 38 sealing between the second ring end 38 and the bulkhead housing 16, and establishes a second outer sealing site 116 at the second ring end 38 sealing between the second ring end 38 and the bulkhead housing 16. As with FIG. 1, in FIG. 8 the first outer sealing site 112 is located generally radially outward from the first inner sealing site 110 and the second outer sealing site 116 is located generally radially outward from the second inner sealing site 114. As with FIG. 1, in FIG. 8 first inner sealing site 110 and the first outer sealing site 112 define a first hydraulic area exposed to the pressure of the first fluid 32, the pressure of the first fluid 32 acting over the first hydraulic area and producing a first axially oriented hydraulic force acting on the backup ring 12 in a first hydraulic force direction 146. As with FIG. 1, in FIG. 8 the second inner sealing site 114 and the second outer sealing site 116 define a second hydraulic area exposed to the pressure of the first fluid 32. As with FIG. 1, in FIG. 8 the pressure of the first fluid 32 acts over the second hydraulic area and produces a second axially oriented hydraulic force acting on the backup ring 12 in a second hydraulic force direction 148 that is opposite the first hydraulic force direction 146, and oriented toward the retaining shoulder 62 of the retainer 14. The first hydraulic force direction 146 and the second hydraulic force direction 148 are oppositely oriented with respect to one another, and act in opposed generally axial directions. As with FIG. 1, in FIG. 8 the first hydraulic area is the area between the first inner sealing site 110 and the first outer sealing site 112, and the second hydraulic area is the area between the second inner sealing site 114 and the second outer sealing site 116.

As with FIG. 1, in FIG. 8 an inner balancing seal 18 is in face sealing contact with the second ring end 38 of the backup ring 12 and the bulkhead housing, and provides the sealing material establishing the second inner sealing site 114. As with FIG. 1, in FIG. 8 an outer balancing seal 20 is in face sealing contact with the second ring end 38 of the backup ring 12 and the bulkhead housing 16, and provides the sealing material establishing the second outer sealing site 116.

It is preferred that the first and second hydraulic areas be substantially equal, so that the first and second axially-acting hydraulic forces are substantially equal, and substantially cancel one another out, so that the net axially-acting hydraulic force acting on the backup ring 12 is negligible, leaving the backup ring 12 free to translate laterally with any relative lateral movement between the shaft 4 and the bulkhead housing 16.

A dynamic seal 10 is held in sealing engagement with the sealing surface 28 of the shaft 4. Sealing material of the dynamic seal 10 bridges the extrusion gap between the ring inner surface 40 of the backup ring 12 and the sealing surface 28 of the shaft 4. Sealing material of the dynamic seal 10 also bridges the extrusion gap between the retaining shoulder 62 of the retainer 14 and the first ring end 36 of the backup ring 12, establishing the first outer sealing site 112.

If desired, the second fluid 34 can be retained by an outboard seal 126, which partitions the second fluid 34 from a third fluid 35. If desired, an outboard port 128 can be incorporated for introducing the second fluid 34 into the sealed region between the dynamic seal 10 and the outboard seal 126. If desired, more than one outboard port 128 can be incorporated for circulating the second fluid 34 for cooling or other purposes. If desired, the outboard seal 126 could be incorporated into a laterally translating seal carrier (not shown) of a type known to the prior art, such that the outboard seal 126 could translate laterally in concert with any lateral motion of the shaft 4. If desired, the outboard seal 126 could also be supported by a laterally translatable backup ring of the general type disclosed by this specification. As a simplification, the outboard seal 126 and outboard port 128 may be omitted.

In FIG. 8 and in many other figures herein, the first ring end 36 and the second ring end 38 of the backup ring 12 are substantially planar surfaces that are substantially parallel to one another.

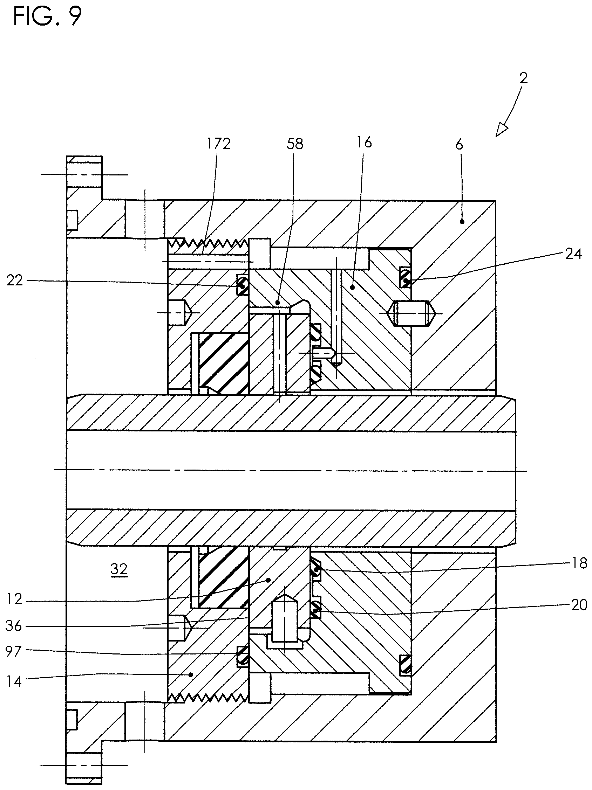

In Figure 9, a longitudinal cross-sectional view of a sealed machine assembly is shown generally at 2. FIG. 9 is an alternate embodiment of the present invention, showing that the retainer 14 can be threadedly (or otherwise) retained to the machine housing 6, rather than to the bulkhead housing 16, while still causing the retainer 14 to be secured in a sealed relationship with the bulkhead housing 16. FIG. 9 also shows that the retainer seal 22 can be mounted in a groove in the retainer 14, rather than a groove in the bulkhead housing 16, while still allowing the supporting wall 97 to be substantially aligned with the first ring end 36 of the backup ring 12. Although FIG. 9 shows the groove for the retainer seal 22 to be formed in the retainer 14, the groove could easily be formed in the bulkhead housing 16 if desired. Figure 9 also shows that the housing seal 24 can be a face seal. Although FIG. 9 shows the groove for the housing seal 24 to be formed in the bulkhead housing 16, the groove could easily be formed in the machine housing 6 if desired. The spacer section 58 is formed as part of the bulkhead housing 16. As with many of the other figures herein, the backup ring 12 is pressure-balanced in the radial direction and force-balanced in the axial direction. The retainer 14 is not sealed with respect to the machine housing 6, and a fluid communication hole 172 is provided in the retainer 14 for ensuring rapid transmission of the pressure of the first fluid 32 to the sealed region between the inner balancing seal 18 and the outer balancing seal 20.

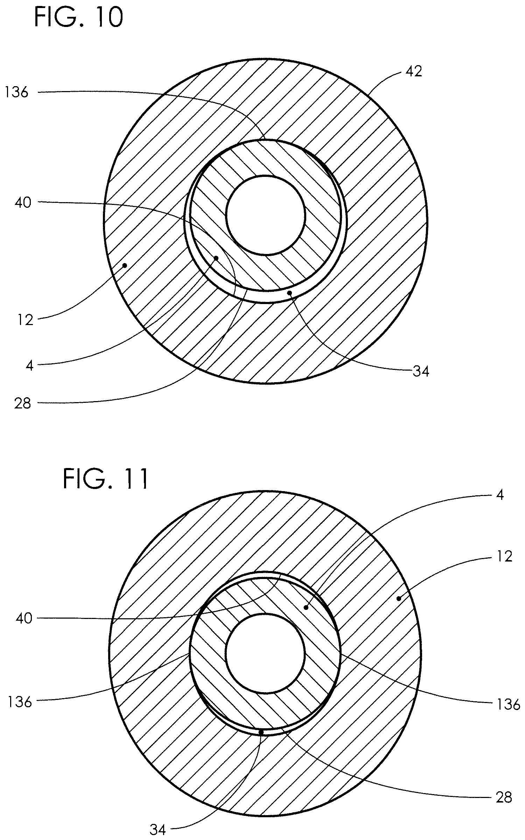

Figure 10 is a schematic representation of the shaft 4 and the backup ring 12 of an embodiment of the present invention, showing the gradual circumferential convergence to a tangency location 136 between the ring inner surface 40 and the sealing surface 28 in a situation where the shaft 4 has moved laterally into contact with the backup ring 12. Clearance between the shaft 4 and the backup ring 12 is exaggerated for the sake of clarity. The gradual circumferential convergence provides hydrodynamic lubrication at the tangency location 136 when the second fluid 34 has lubricating qualities and relative rotation is present between the shaft 4 and the backup ring 12. If desired as a simplification, the ring outer surface 42 may have generally circular shape, as shown.

Figure 11 is a schematic representation of the shaft 4 and the backup ring 12 of an embodiment of the present invention, showing the gradual circumferential convergence to two tangency locations 136 between the ring inner surface 40 and the sealing surface 28 in a situation where the backup ring 12 is large, and as a result somewhat elliptical. Clearance is exaggerated for the sake of clarity. The gradual circumferential convergence provides hydrodynamic lubrication at the tangency locations 136 when the second fluid 34 has lubricating qualities and relative rotation is present between the shaft 4 and the backup ring 12.

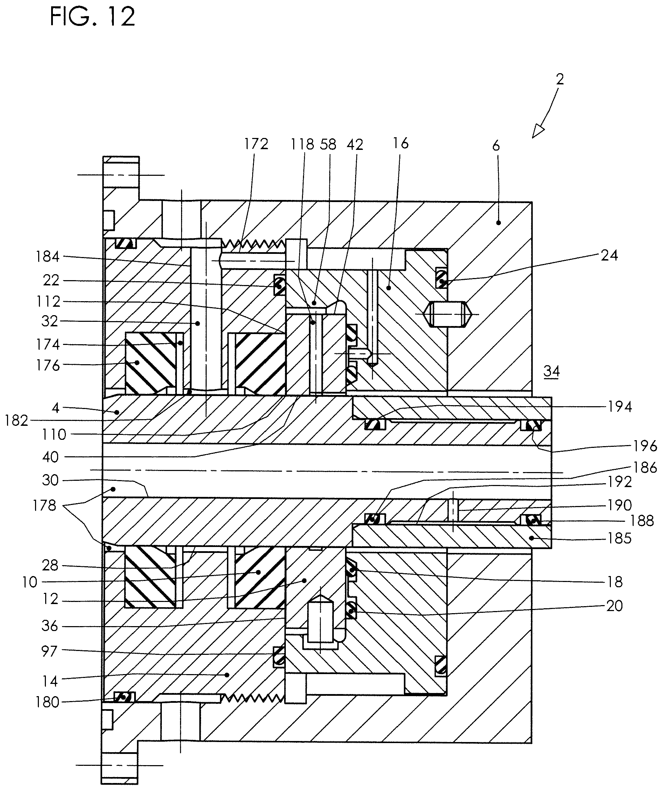

In FIG. 12, a longitudinal cross-sectional view of a sealed machine assembly is shown generally at 2, representing a device such as a swivel that retains a first fluid 32 which is preferably a pressurized seal lubricant and separates the first fluid 32 from a second fluid 34, and conducts a pressurized process fluid 178 through the internal passage 30 of the shaft 4, and prevents the passage of the process fluid 178 into the first fluid 32 and the second fluid 34. FIG. 12 is an alternate embodiment of the present invention, showing that the retainer 14 can be threadedly (or otherwise) retained to the machine housing 6 and can incorporate a groove 174 locating a dynamic partitioning seal 176 for partitioning the first fluid 32 from the process fluid 178 (such as oilfield drilling fluid) that may flow through the internal passage 30 of the shaft 4. The dynamic partitioning seal 176 is preferably in sealed relationship with the sealing surface 28 of the shaft 4, and with the groove 174 of the retainer 14. The dynamic seal 10 is sealed with respect to the shaft 4 and the retainer 14, and as with many other figures herein, establishes first inner sealing site 110 and a first outer sealing site 112. As with FIG. 9, in FIG. 12 the retainer seal 22 can be mounted in a groove in the retainer 14, rather than a groove in the bulkhead housing 16, while still allowing the supporting wall 97 to be substantially aligned with the first ring end 36 of the backup ring 12. A static partitioning seal 180 is preferably mounted in a seal groove in either the retainer 14 or the machine housing 6, and establishes a sealed relationship between the retainer 14 and the machine housing 6, partitioning the first fluid 32 from the process fluid 178. The pressure of the first fluid 32 is preferably somewhat greater than the pressure of the process fluid 178, to properly orient the partitioning seal 176 within the groove 174. The first fluid 32 is conducted radially inward to the annular clearance region 182 between the dynamic seal 10 and the partitioning seal 176 by a fluid passage 184, which may be radially oriented as shown, if desired. Although FIG. 12 shows the groove for the retainer seal 22 to be formed in the retainer 14, the groove could easily be formed in the bulkhead housing 16 if desired. The bulkhead housing 16 of FIG. 12 is the same as the bulkhead housing 16 of FIG. 9, and therefore shows that the housing seal 24 can be a face seal. Although FIG. 12 shows the groove for the housing seal 24 to be formed in the bulkhead housing 16, the groove could easily be formed in the machine housing 6 if desired. The spacer section 58 may, if desired, be formed as part of the bulkhead housing 16, as shown. As with many of the other figures herein, the backup ring 12 is pressure balanced in the radial direction and force balanced in the axial direction. The threads of the retainer 14 are not sealed with respect to the machine housing 6, and a fluid communication hole 172 may be used in the retainer 14 for ensuring rapid transmission of the pressure of the first fluid 32 to the sealed region between the inner balancing seal 18 and the outer balancing seal 20.

In FIG. 12, the shaft 4 is recessed to receive a pressure sleeve 185, and first and second sleeve seals 186 and 188 establish a static sealed relationship between the shaft 4 and the pressure sleeve 185. A process fluid port 190 conducts the pressure of the process fluid 178 through the wall of the shaft 4, and into the sealed region between the first and second sleeve seals 186 and 188, allowing the pressure of the process fluid 178 to act on the inner sleeve surface 192 of the pressure sleeve 185 that is located between opposed groove walls 194 and 196, and allowing the pressure of the process fluid 178 to act on the outwardly-oriented surfaces of the shaft 4 that are located between opposed groove walls 194 and 196. Between opposed groove walls 194 and 196, the shaft 4 is radially pressure balanced, and therefore largely immune to pressure induced deformation. This radial pressure balancing helps to minimize the pressure-induced deformation of the portion of the sealing surface 28 of the shaft 4 that is located directly inside the backup ring 12. This dimensional stability of the sealing surface 28 enables the initial clearance between the ring inner surface 40 of the backup ring 12 and the sealing surface 28 of the shaft 4 to be minimal. As in other figures, the backup ring 12 is radially pressure balanced by allowing the pressure of the second fluid 34 to act on both the ring inner surface 40 and the ring outer surface 42. In FIG. 12, the pressure of the second fluid 34 is conducted to the ring outer surface 42 by a pressure port 118.

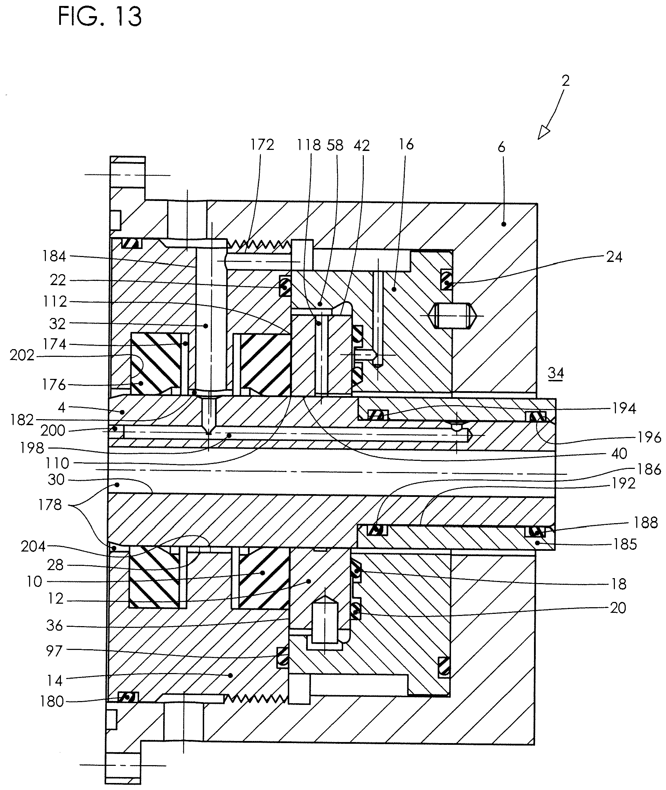

In FIG. 13, a longitudinal cross-sectional view of a sealed machine assembly is shown generally at 2, representing a device such as a swivel that retains a first fluid 32 which is preferably a pressurized seal lubricant, and separates the first fluid 32 from a second fluid 34, and conducts a pressurized process fluid 178 through the internal passage 30 of the shaft 4, and prevents the passage of the process fluid 178 into the first fluid 32 and the second fluid 34. The retainer 14 is threadedly (or otherwise) retained to the machine housing 6 and can incorporate a groove 174 locating a dynamic partitioning seal 176 for partitioning the first fluid 32 from the process fluid 178 (such as oilfield drilling fluid) that may flow through the internal passage 30 of the shaft 4. The dynamic partitioning seal 176 is preferably in sealed relationship with the sealing surface 28 of the shaft 4, and with the groove 174 of the retainer 14. The dynamic seal 10 is sealed with respect to the shaft 4 and the retainer 14, and as with many other figures herein, establishes first inner sealing site 110 and a first outer sealing site 112. As with FIG. 9, in FIG. 13 the retainer seal 22 can be mounted in a groove in the retainer 14, rather than a groove in the bulkhead housing 16, while still allowing the supporting wall 97 to be substantially aligned with the first ring end 36 of the backup ring 12. A static partitioning seal 180 is preferably mounted in a seal groove in either the retainer 14 or the machine housing 6, and establishes a sealed relationship between the retainer 14 and the machine housing 6, partitioning the first fluid 32 from the process fluid 178. The pressure of the first fluid 32 is preferably modestly greater than the pressure of the process fluid 178, to properly orient the partitioning seal 176 within the groove 174. For example, if the pressure of the process fluid 178 was 5,000 psi, the pressure of the first fluid 32 could be several hundred psi greater than 5,000 psi, to orient the partitioning seal 176 against the support wall 202 of the groove 174 for abrasion resistance purposes. The first fluid 32 is conducted radially inward to the annular clearance region 182 between the dynamic seal 10 and the partitioning seal 176 by a fluid passage 184, which may be radially oriented as shown, if desired. Although FIG. 13 shows the groove for the retainer seal 22 to be formed in the retainer 14, the groove could easily be formed in the bulkhead housing 16 if desired. The bulkhead housing 16 of FIG. 13 is the same as the bulkhead housing 16 of FIG. 9, and therefore shows that the housing seal 24 can be a face seal. Although FIG. 13 shows the groove for the housing seal 24 to be formed in the bulkhead housing 16, the groove could easily be formed in the machine housing 6 if desired. The spacer section 58 may, if desired, be formed as part of the bulkhead housing 16, as shown. As with many of the other figures herein, the backup ring 12 is preferably pressure balanced in the radial direction and preferably force balanced in the axial direction. Simplifications are possible. For example, if desired, the backup ring 12 could be radially pressure balanced but not axially force balanced. The threads of the retainer 14 are not sealed with respect to the machine housing 6, and a fluid communication hole 172 may be used in the retainer 14 for ensuring rapid transmission of the pressure of the first fluid 32 to the sealed region between the inner balancing seal 18 and the outer balancing seal 20.

In FIG. 13, the shaft 4 is recessed to receive a pressure sleeve 185, and first and second sleeve seals 186 and 188 establish a static sealed relationship between the shaft 4 and the pressure sleeve 185. A cross-drilled hole 198 conducts the pressure of the first fluid 32 into the sealed region between the first and second sleeve seals 186 and 188, allowing the pressure of the first fluid 32 to act on the interior surfaces of the pressure sleeve 185 that are located between opposed groove walls 194 and 196, and allowing the pressure of the first fluid 32 to act on the outwardly oriented surfaces of the shaft 4 that are located between opposed groove walls 194 and 196. Because the pressure of the first fluid 32 is only modestly greater than the pressure of the process fluid 178, in the region between opposed groove walls 194 and 196, the shaft 4 is nearly pressure balanced in the radial direction, and therefore largely immune to pressure differential induced deformation. Indeed, because the pressure of the first fluid 32 is only modestly greater than the pressure of the process fluid 178, it can be said that the shaft 4 is substantially radially pressure balanced in the region located between opposed groove walls 194 and 196. This achievement of nominal radial pressure balancing helps to minimize the pressure induced deformation of the portion of the sealing surface 28 of the shaft 4 that is located directly inside the backup ring 12. This dimensional stability of the sealing surface 28 enables the initial clearance between the ring inner surface 40 of the backup ring 12 and the sealing surface 28 of the shaft 4 to be minimal. As in other figures, the backup ring 12 is preferably radially pressure balanced by allowing the pressure of the second fluid 34 to act on both the ring inner surface 40 and the ring outer surface 42. In FIG. 13, the pressure of the second fluid 34 is conducted to the ring outer surface 42 by a pressure port 118, but if desired the pressure of the second fluid 34 could be conducted via a hole in the bulkhead housing 16.

As with many cross-drilled holes of the prior art, the cross-drilled hole 198 is sealed by a plug 200 of any suitable type, such as a weld plug, or a threaded plug, or a press fit plug, etc. If desired, the bore 204 of the retainer 14 can be sized to serve as a journal bearing that provides radial guidance to the shaft 4.

### Conclusion

In view of the foregoing it is evident that the embodiments of the present invention are adapted to attain some or all of the aspects and features hereinabove set forth, together with other aspects and features which are inherent in the apparatus disclosed herein.

Even though several specific geometries are disclosed in detail herein, many other geometrical variations employing the basic principles and teachings of this invention are possible. The foregoing disclosure and description of the invention are illustrative and explanatory thereof, and various changes in the size, shape and materials, as well as in the details of the illustrated construction, may be made without departing from the spirit of the invention. The present embodiments are, therefore, to be considered as merely illustrative and not restrictive, the scope of the invention being indicated by the claims rather than the foregoing description, and all changes which come within the meaning and range of equivalence of the claims are therefore intended to be embraced therein.

## Claims

1. A sealing assembly (8) comprising:
a bulkhead housing (16) having a portion thereof exposed to a first fluid (32) having a pressure and having a portion thereof exposed to a second fluid (34) having a pressure, and having a locating shoulder (80) facing in a generally axial direction;
a shaft (4) having a portion thereof exposed to said first fluid and a portion thereof exposed to said second fluid, said shaft defining an externally-oriented sealing surface (28) of generally cylindrical form, at least part of said sealing surface being located at least partially within said bulkhead housing and being relatively movable with respect to said bulkhead housing;
a retainer (14) located radially outward of at least a portion of said shaft and surrounding at least a portion of said shaft, said retainer defining a retaining shoulder (62) facing generally toward said locating shoulder (80) of said bulkhead housing;
a backup ring (12) of generally circular form having a first ring end (36) with at least a portion thereof facing said retaining shoulder (62) and a second ring end (38) having at least a portion thereof facing said locating shoulder (80), said first and second ring ends facing in generally opposite directions, said backup ring having a ring inner surface (40) facing generally inward toward said shaft sealing surface (28) and establishing a region of clearance therewith and a region of tangential contact therewith, and having a ring outer surface (42) located radially outward of said ring inner surface (40) and between said retaining shoulder (62) and said locating shoulder (80) and facing generally radially outward, said backup ring having radial thickness between said ring inner surface and said ring outer surface, said ring inner and outer surfaces being exposed to said second fluid and said second fluid pressure causing said backup ring to be substantially radially pressure balanced,
said region of tangential contact between said shaft sealing surface of said shaft and said ring inner surface locating said backup ring laterally,
said region of clearance forming an extrusion gap between said ring inner surface and said sealing surface of said shaft at said first ring end;
a dynamic seal (10) contacting said sealing surface of said shaft and said first ring end of said backup ring and establishing a first inner sealing site (110) sealing said extrusion gap between said ring inner surface and said sealing surface of said shaft,
said dynamic seal (10) or a face seal (142) in sealing contact with said retainer and said backup ring establishing a first outer sealing site (112);
an inner balancing seal (18) in face sealing contact with said bulkhead housing and said second ring end of said backup ring establishing a second inner sealing site (114);
an outer balancing seal (20) in face sealing contact with said bulkhead housing and said second ring end of said backup ring establishing a second outer sealing site (116);
said first inner sealing site (110) separated from said second inner sealing site (114) by an axial distance, said first outer sealing site (112) separated from said second outer sealing site (116) by an axial distance, said second inner and outer sealing sites located radially outward of and encircling said shaft, said first inner and outer sealing sites and said second inner and outer sealing sites each sealing said first fluid from said second fluid, and sealing said first fluid pressure from said second fluid pressure, wherein:
said pressure of said first fluid being greater than said pressure of said second fluid,
said first outer sealing site (112) being located generally radially outward from said first inner sealing site (110) and said second outer sealing site (116) being located generally radially outward from said second inner sealing site (114), said first inner sealing site and said first outer sealing site defining a first hydraulic area exposed to said first fluid pressure, said first fluid pressure acting over said first hydraulic area and producing a first axially-oriented hydraulic force acting on said backup ring in a first hydraulic force direction, and
said second inner sealing site (114) and said second outer sealing site (116) defining a second hydraulic area exposed to said first fluid pressure, said first fluid pressure acting over said second hydraulic area and producing a second axially-oriented hydraulic force acting on said backup ring in a second hydraulic force direction that is opposite to said first hydraulic force direction.

2. The sealing assembly of claim 1, wherein said first hydraulic area (150) is substantially equal to said second hydraulic area (152).

3. The sealing assembly of any of claims 1 to 2, wherein a pressure port (118') passes through said backup ring (12) in a generally radial direction, communicating from said region of clearance between said ring inner surface (40) and said sealing surface (28) of said shaft, said pressure port (118') located between said first and second ring ends (36, 38) and spaced from said second ring end, said pressure port located between said dynamic seal (10) and said locating shoulder (80) of said bulkhead housing (16), said pressure port extending from an inwardly facing open end to an outwardly facing open end, and said outwardly facing open end located radially outward from said inwardly facing open end, said pressure port communicating said second fluid and said pressure of said second fluid to said ring outer surface (42).

4. The sealing assembly of any of the preceding claims, wherein said bulkhead housing includes a pressure port (118) communicating said second fluid and said pressure of said second fluid to said ring outer surface.

5. The sealing assembly of any of the preceding claims, wherein said bulkhead housing includes a pressure passage (88) communicating said first fluid and said pressure of said first fluid to said second hydraulic area (152), at least some of said first fluid located between said second inner (114) and outer (116) sealing sites and between said inner (18) and outer (20) balancing seals, said inner and outer balancing seals each located between and exposed to said first and second fluids and each sealing said first fluid from said second fluid.

6. The sealing assembly of any of the preceding claims, wherein said first ring end (36) and said second (38) ring end are substantially flat surfaces, and said first ring end is substantially parallel to said second ring end.

7. The sealing assembly of any of the preceding claims, wherein said retainer provides a gland bore (68) of annular form located radially outward from, in spaced relation to, and surrounding part of said sealing surface of said shaft; and
said dynamic seal is located at least partially within said gland bore, said dynamic seal having a static sealing surface held in sealing contact with said gland bore of said retainer.

8. The sealing assembly of any of the preceding claims, wherein said backup ring has an axial length between said first (36) and second (38) ring ends, and all of said axial length is located axially between said dynamic seal and said locating shoulder, no portion of said dynamic seal is located axially between said first and second ring ends, no portion of said backup ring encircles said dynamic seal, and no portion of said backup ring is located radially between said dynamic seal and said retainer, at least a portion of said dynamic seal is located inside said retainer.

9. The sealing assembly of any of claims 1 to 4, wherein said backup ring includes a pressure passage (88') from said first ring end to said second ring end, said pressure passage containing and communicating said first fluid and said pressure of said first fluid to said second hydraulic area, at least some of said first fluid located between said second inner (114) and outer (116) sealing sites and between said inner and outer balancing seals, said inner and outer balancing seals each located between and exposed to said first and second fluids and each sealing said first fluid from said second fluid.

10. The sealing assembly of any of claims 1 to 4 and 9, wherein said first outer sealing site (112) is formed by a face seal in sealing contact with said retainer and said backup ring, said backup ring providing a gland bore (68) located in spaced relation to said shaft sealing surface and having sealing contact with and surrounding at least part of said dynamic seal.

11. The sealing assembly of any of claims 1 to 8, wherein said retainer includes a gland wall (70) located adjacent to said dynamic seal and facing generally toward said dynamic seal, and facing generally toward said first ring end and said locating shoulder, said dynamic seal being located between said gland wall and said first ring end, and said backup ring being located between said dynamic seal and said locating shoulder.

12. The sealing assembly of any of claims 1 to 4, wherein said bulkhead housing (16) includes a pressure passage (88) containing said first fluid and said pressure of said first fluid and having an opening located between said inner and outer balancing seals and facing toward said backup ring.

13. The sealing assembly of claim 12, wherein said pressure passage (88) is a cross-drilled hole and said retainer has a generally axially oriented fluid communication hole located radially outward of said first outer sealing site, and said fluid communication hole communicating said first fluid to said cross-drilled hole.

14. The sealing assembly of any of claims 1 to 8, wherein no part of said dynamic seal (10) being inside any part of said backup ring (12).

## Patentansprüche

1. Dichtungsanordnung (8) umfassend:
ein Schottengehäuse (16), das einen Abschnitt davon aufweist, der einem ersten Fluid (32) mit einem Druck ausgesetzt ist und das einen Abschnitt davon aufweist, der einem zweiten Fluid (34) mit einem Druck ausgesetzt ist, und das eine Positionierungsschulter (80) aufweist, die im Allgemeinen in einer axialen Richtung gerichtet ist;
eine Welle (4), die einen Abschnitt davon aufweist, der dem ersten Fluid ausgesetzt ist, und die einen Abschnitt davon aufweist, der dem zweiten Fluid ausgesetzt ist, wobei die Welle eine nach außen orientierte Dichtfläche (28) von im Allgemeinen zylindrischer Form definiert, wobei zumindest ein Teil der Dichtungsfläche zumindest teilweise innerhalb des Schottengehäuses angeordnet ist und relativ bewegbar in Bezug auf das Schottengehäuse ist;
eine Halterung (14), die radial außerhalb von mindestens einem Abschnitt der Welle angeordnet ist und mindestens einen Abschnitt der Welle umgibt, wobei die Halterung eine Halteschulter (62) definiert, die im Wesentlichen der Positionierungsschulter (80) des Schottengehäuses zugewandt ist;
einen Stützring (12) mit im Allgemeinen kreisförmiger Form, der ein erstes Ringende (36) aufweist, mit mindestens einem Abschnitt davon, der der Halteschulter (62) zugewandt ist, und ein zweites Ringende (38) aufweist, das mindestens einen Abschnitt davon aufweist, der der Positionierungsschulter (80) zugewandt ist, wobei das erste und das zweite Ringende im Allgemeinen in entgegengesetzten Richtungen gewandt sind, wobei der Stützring eine Ringinnenfläche (40) aufweist, die im Allgemeinen nach innen in Richtung der Wellendichtfläche (28) gewandt ist und damit einen Bereich des Spiels und einen Bereich mit tangentialem Kontakt damit einrichtet, und eine Ringaußenfläche (42) aufweist, die radial außerhalb der Ringinnenfläche (40) und zwischen der Halteschulter (62) und der Positionierungsschulter (80) angeordnet ist und im Allgemeinen radial nach außen gewandt ist, wobei der Stützring eine radiale Dicke zwischen der Ringinnenfläche und der Ringaußenfläche aufweist, wobei die Ringinnen- und Außenflächen dem zweiten Fluid ausgesetzt sind und der zweite Fluiddruck bewirkt, dass der Stützring im Wesentlichen radial druckausgeglichen ist;
wobei der Bereich des tangentialen Kontakts zwischen der Wellendichtfläche des Schafts und der Ringinnenfläche den Stützring seitlich anordnen,
wobei der Bereich des Spiels einen Extrusionsspalt zwischen der Ringinnenfläche und der Dichtfläche der Welle an dem ersten Ringende bildet;
eine dynamische Dichtung (10), die mit der Dichtfläche der Welle und dem ersten Ringende des Stützrings in Kontakt steht und eine erste innere Dichtungsstelle (110) bildet, die den Extrusionsspalt zwischen der Ringinnenfläche und der Dichtungsfläche der Welle abdichtet,
wobei die dynamische Dichtung (10) oder eine Frontdichtung (142) in abdichtendem Kontakt mit dem Halter und dem Stützring, der eine erste äußere Dichtungsstelle (112) bildet;
eine innere Ausgleichsdichtung (18) in abdichtendem Frontkontakt mit dem Schottengehäuse und das zweite Ringende des Stützringes, das eine zweite innere Dichtungsstelle (114) bildet;
eine äußere Ausgleichsdichtung (20) in abdichtendem Frontkontakt mit dem Schottengehäuse und das zweite Ringende des Stützringes, das eine zweite äußere Dichtungsstelle (116) bildet;
wobei die erste innere Dichtungsstelle (110) von der zweiten inneren Dichtungsstelle (114) um einen axialen Abstand getrennt ist, wobei die erste äußere Dichtungsstelle (112) von der zweiten äußeren Dichtungsstelle (116) um einen axialen Abstand getrennt ist, wobei die zweite innere und die zweite äußere Dichtungsstelle radial außerhalb der Welle angeordnet sind und diese umlaufen, wobei die erste innere und äußere Dichtungsstelle und die zweite innere und äußere Dichtungsstelle jeweils das erste Fluid von dem zweiten Fluid abdichten, und den ersten Fluiddruck von dem zweiten Fluiddruck abdichten, wobei:
der Druck des ersten Fluids größer als der Druck des zweiten Fluids ist,
wobei die erste äußere Dichtungsstelle (112) im Wesentlichen radial außerhalb von der ersten inneren Dichtungsstelle (110) angeordnet ist und die zweite äußere Dichtungsstelle (116) im Wesentlichen radial außerhalb der zweiten inneren Dichtungsstelle (114) angeordnet ist, wobei die erste innere Dichtungsstelle und die erste äußere Dichtungsstelle einen ersten Hydraulikbereich definieren, der dem ersten Fluiddruck ausgesetzt ist, wobei der erste Fluiddruck durch den ersten Hydraulikbereich wirkt und eine erste axial gerichtete hydraulische Kraft erzeugt, die auf den Stützring in einer ersten hydraulischen Kraftrichtung wirkt, und
die zweite innere Dichtungsstelle (114) und die zweite äußere Dichtungsstelle (116) definieren einen zweiten Hydraulikbereich, der dem ersten Fluiddruck ausgesetzt ist, wobei der erste Fluiddruck durch den zweiten Hydraulikbereich wirkt und eine zweite axial orientierte hydraulische Kraft erzeugt, die auf den Stützring in einer zweiten hydraulischen Kraftrichtung wirkt, die der ersten hydraulischen Kraftrichtung entgegengesetzt ist.

2. Dichtungsanordnung nach Anspruch 1, wobei der erste Hydraulikbereich (150) im Wesentlichen gleich dem zweiten Hydraulikbereich (152) ist.

3. Dichtungsanordnung nach einem der Ansprüche 1 bis 2, wobei ein Druckanschluss (118') durch den Stützring (12) in einer im Wesentlichen radialen Richtung verläuft, der mit dem Bereich des Spiels zwischen der Ringinnenfläche (40) und der Dichtfläche (28) der Welle verbunden ist, wobei der Druckanschluss (118') zwischen dem ersten und dem zweiten Ringende (36, 38) angeordnet ist und von dem zweiten Ringende beabstandet ist, wobei der Druckanschluss zwischen der dynamischen Dichtung (10) und der Positionierungsschulter (80) des Schottengehäuses (16) angeordnet ist, wobei der Druckanschluss sich von einem nach innen gewandten offenen Ende zu einem nach außen gewandten offenen Ende erstreckt, und das nach außen gewandte offene Ende radial nach außen von dem nach innen gewandten offenen Ende angeordnet ist, wobei der Druckanschluss das zweite Fluid und den Druck des zweiten Fluids an die Ringaußenfläche (42) überträgt.

4. Dichtungsanordnung nach einem der vorstehenden Ansprüche, wobei das Schottengehäuse einen Druckanschluss (118) umfasst, der das zweite Fluid und den Druck des zweiten Fluids auf die Ringaußenfläche überträgt.

5. Dichtungsanordnung nach einem der vorstehenden Ansprüche, wobei das Schottengehäuse einen Druckdurchgang (88) umfasst, der das erste Fluid und den Druck des ersten Fluids auf den zweiten Hydraulikbereich (152) überträgt, wobei zumindest ein Teil des ersten Fluids zwischen der zweiten inneren (114) und der äußeren (116) Dichtungsstelle und zwischen der inneren (18) und der äußeren (20) Ausgleichsdichtung angeordnet ist, wobei die innere und die äußere Ausgleichsdichtung jeweils zwischen dem ersten und dem zweiten Fluid angeordnet sind und diesen ausgesetzt sind und jede das erste Fluid von dem zweiten Fluid abdichtet.

6. Dichtungsanordnung nach einem der vorstehenden Ansprüche, wobei das erste Ringende (36) und das zweite (38) Ringende im Wesentlichen flache Oberflächen sind und das erste Ringende im Wesentlichen parallel zu dem zweiten Ringende ist.

7. Dichtungsanordnung nach einem der vorstehenden Ansprüche, wobei der Halter eine Anschlussbohrung (68) mit ringförmiger Form aufweist, die radial nach außen angeordnet ist von, in beabstandeter Beziehung zu der Dichtungsfläche der Welle ist, und einen Teil dieser umgibt; und
wobei die dynamische Dichtung zumindest teilweise innerhalb der Anschlussbohrung angeordnet ist, wobei die dynamische Dichtung eine statische Dichtfläche aufweist, die in dichtendem Kontakt mit der Anschlussbohrung des Halters gehalten ist.

8. Dichtungsanordnung nach einem der vorangehenden Ansprüche, wobei der Stützring eine axiale Länge zwischen dem ersten (36) und dem zweiten (38) Ringende aufweist, und die gesamte axiale Länge axial zwischen der dynamischen Dichtung und der Positionierungsschulter angeordnet ist, wobei kein Abschnitt der dynamischen Dichtung axial zwischen dem ersten und dem zweiten Ringende angeordnet ist, wobei kein Abschnitt des Stützringes die dynamische Dichtung umläuft, und kein Abschnitt des Stützrings radial zwischen der dynamischen Dichtung und dem Halter angeordnet ist, wenigstens ein Teil der dynamischen Dichtung innerhalb des Halters angeordnet ist.

9. Dichtungsanordnung nach einem der Ansprüche 1 bis 4, wobei der Stützring einen Druckdurchgang (88') von dem ersten Ringende zu dem zweiten Ringende aufweist, wobei der Druckdurchgang das erste Fluid und den Druck des ersten Fluids enthält und das erste Fluid und den Druck des ersten Fluids auf den zweiten Hydraulikbereich überträgt, wobei zumindest ein Teil des ersten Fluids zwischen der zweiten inneren (114) und der äußeren (116) Dichtungsstell und zwischen der inneren und der äußeren Ausgleichsdichtung angeordnet ist, wobei die innere und die äußere Ausgleichsdichtung jeweils zwischen dem ersten und dem zweiten Fluid angeordnet sind und diesen ausgesetzt sind und jede das erste Fluid von dem zweiten Fluid abdichtet.

10. Dichtungsanordnung nach einem der Ansprüche 1 bis 4 und 9, wobei die erste äußere Dichtungsstelle (112) durch eine Frontdichtung in dichtendem Kontakt mit dem Halter und dem Stützring gebildet ist, wobei der Stützring eine Anschlussbohrung (68) bereitstellt, die in beabstandeter Beziehung zu der Wellendichtfläche angeordnet ist, und einen dichtendem Kontakt mit der dynamischen Dichtung aufweist und mindestens einen Teil dieser umgibt.

11. Dichtungsanordnung nach einem der Ansprüche 1 bis 8, wobei der Halter eine Anschlusswand (70) umfasst, die benachbart zu der dynamischen Dichtung angeordnet ist und im Allgemeinen in Richtung der dynamischen Dichtung gewandt ist, und im Allgemeinen dem ersten Ringende und der Positionierungsschulter zugewandt ist, wobei die dynamische Dichtung zwischen der Anschlusswand und dem ersten Ringende angeordnet ist, und der Stützring zwischen der dynamischen Dichtung und der Positionierungsschulter angeordnet ist.

12. Dichtungsanordnung nach einem der Ansprüche 1 bis 4, wobei das Schottgehäuse (16) einen Druckdurchgang (88) aufweist, der das erste Fluid und den Druck des ersten Fluids enthält und eine Öffnung aufweist, die zwischen der inneren und der äußeren Ausgleichsdichtung angeordnet ist und dem Stützring zugewandt ist.

13. Dichtungsanordnung nach Anspruch 12, wobei der Druckdurchgang (88) ein quergebohrtes Loch ist und der Halter ein im Allgemeinen axial ausgerichtetes Fluidverbindungsloch aufweist, das radial außerhalb der ersten äußeren Dichtungsstelle angeordnet ist, und das Fluidverbindungsloch das erste Fluid auf das quergebohrten Loch überträgt.

14. Dichtungsanordnung nach einem der Ansprüche 1 bis 8, wobei kein Teil der dynamischen Dichtung (10) innerhalb eines Teils des Stützrings (12) ist.

## Revendications

1. Ensemble d'étanchéité comprenant :
un boîtier de cloison (16) ayant une partie de celui-ci exposée à un premier fluide (32) ayant une certaine pression et ayant une partie de celui-ci exposée à un second fluide (34) ayant une certaine pression et ayant un épaulement de positionnement (80) orienté dans une direction généralement axiale ;
un arbre (4) ayant une partie de celui-ci exposée audit premier fluide et une partie de celui-ci exposée audit second fluide, ledit arbre définissant une surface d'étanchéité (28) orientée vers l'extérieur de forme généralement cylindrique, au moins une partie de ladite surface d'étanchéité étant située au moins partiellement à l'intérieur dudit boîtier de cloison et étant relativement mobile par rapport audit boîtier de cloison ;
un élément de retenue (14) situé radialement vers l'extérieur d'au moins une partie dudit arbre et entourant au moins une partie dudit arbre, ledit élément de retenue définissant un épaulement de retenue (62) faisant généralement face audit épaulement de positionnement (80) dudit boîtier de cloison ;
une bague d'appui (12) de forme généralement circulaire ayant une première extrémité de bague (36) dont au moins une partie fait face audit épaulement de retenue (62) et une seconde extrémité de bague (38) dont au moins une partie fait face audit épaulement de positionnement (80), lesdites première et seconde extrémités de bague étant orientées dans des directions généralement opposées, ladite bague d'appui ayant une surface intérieure (40) de la bague qui fait face généralement vers l'intérieur à ladite surface d'étanchéité (28) de l'arbre et établissant une région de dégagement avec celles-ci et une région de contact tangentiel avec celles-ci, et ayant une surface extérieure (42) de la bague située radialement vers l'extérieur de ladite surface intérieure (40) de la bague et entre ledit épaulement de retenue (62) et ledit épaulement de positionnement (80) et orientée généralement radialement vers l'extérieur, ladite bague d'appui ayant une épaisseur radiale entre ladite surface intérieure de la bague et ladite surface extérieure de la bague, lesdites surfaces intérieure et extérieure de la bague étant exposées audit second fluide et à ladite pression du second fluide, ce qui amène ladite bague d'appui à être sensiblement radialement équilibrée en pression,
ladite région de contact tangentiel entre ladite surface d'étanchéité dudit arbre et ladite surface intérieure de la bague positionnant ladite bague d'appui latéralement,
ladite région de dégagement formant un espace d'extrusion entre ladite surface intérieure de la bague et ladite surface d'étanchéité dudit arbre au niveau de ladite première extrémité de bague ;
un joint dynamique (10) mettant en contact ladite surface d'étanchéité dudit arbre et ladite première extrémité de bague de ladite bague d'appui et établissant un premier site d'étanchéité intérieur (110) rendant étanche ledit espace d'extrusion entre ladite surface intérieure de la bague et ladite surface d'étanchéité dudit arbre,
ledit joint dynamique (10) ou un joint d'étanchéité facial (142) en contact d'étanchéité avec ledit élément de retenue et ladite bague d'appui établissant un premier site d'étanchéité extérieur (112) ;
un joint d'équilibrage intérieur (18) en contact d'étanchéité facial avec ledit boîtier de cloison et ladite seconde extrémité de bague de ladite bague d'appui établissant un second site d'étanchéité intérieur (114) ;
un joint d'équilibrage extérieur (20) en contact d'étanchéité facial avec ledit boîtier de cloison et ladite seconde extrémité de bague de ladite bague d'appui établissant un second site d'étanchéité extérieur (116) ;
ledit premier site d'étanchéité intérieur (110) étant séparé dudit second site d'étanchéité intérieur (114) par une distance axiale, ledit premier site d'étanchéité extérieur (112) étant séparé dudit second site d'étanchéité extérieur (116) par une distance axiale, lesdits seconds sites d'étanchéité intérieur et extérieur étant situés radialement vers l'extérieur de et encerclant ledit arbre, lesdits premiers sites d'étanchéité intérieur et extérieur et lesdits seconds sites d'étanchéité intérieur et extérieur rendant chacun étanche ledit premier fluide dudit second fluide, et rendant étanche ladite pression du premier fluide de ladite pression du second fluide,
ladite pression dudit premier fluide étant supérieure à ladite pression dudit second fluide,
ledit premier site d'étanchéité extérieur (112) étant situé généralement radialement vers l'extérieur dudit premier site d'étanchéité intérieur (110) et ledit second site d'étanchéité extérieur (116) étant situé généralement radialement vers l'extérieur dudit second site d'étanchéité intérieur (114), ledit premier site d'étanchéité intérieur et ledit premier site d'étanchéité extérieur définissant une première zone hydraulique exposée à ladite pression du premier fluide, ladite pression du premier fluide agissant sur ladite première zone hydraulique et produisant une première force hydraulique orientée axialement agissant sur ladite bague d'appui dans une première direction de force hydraulique, et
ledit second site d'étanchéité intérieur (114) et ledit second site d'étanchéité extérieur (116) définissant une seconde zone hydraulique exposée à ladite pression du premier fluide, ladite pression du premier fluide agissant sur ladite seconde zone hydraulique et produisant une seconde force hydraulique orientée axialement agissant sur ladite bague d'appui dans une seconde direction de force hydraulique qui est opposée à ladite première direction de force hydraulique.

2. Ensemble d'étanchéité selon la revendication 1, dans lequel ladite première zone hydraulique (150) est sensiblement équivalente à ladite seconde zone hydraulique (152).

3. Ensemble d'étanchéité selon l'une quelconque des revendications 1 à 2, dans lequel un orifice de pression (118') passe à travers ladite bague d'appui (12) dans une direction généralement radiale, communiquant de ladite région de dégagement entre ladite surface intérieure (40) de la bague et ladite surface d'étanchéité (28) dudit arbre, ledit orifice de pression (118') étant situé entre lesdites première et seconde extrémités de bague (36, 38) et espacé de ladite seconde extrémité de bague, ledit orifice de pression étant situé entre ledit joint dynamique (10) et ledit épaulement de positionnement (80) dudit boîtier de cloison (16), ledit orifice de pression se prolongeant d'une extrémité ouverte orientée vers l'intérieur vers une extrémité ouverte orientée vers l'extérieur, et ladite extrémité ouverte orientée vers l'extérieur étant située radialement vers l'extérieur de ladite extrémité ouverte orientée vers l'intérieur, ledit orifice de pression communiquant ledit second fluide et ladite pression dudit second fluide à ladite surface extérieure (42) de la bague.

4. Ensemble d'étanchéité selon l'une quelconque des revendications précédentes, dans lequel ledit boitier de cloison comprend un orifice de pression (118) communiquant ledit second fluide et ladite pression dudit second fluide à ladite surface extérieure de la bague.

5. Ensemble d'étanchéité selon l'une quelconque des revendications précédentes, dans lequel ledit boitier de cloison comprend un passage de pression (88) communiquant ledit premier fluide et ladite pression dudit premier fluide à ladite seconde zone hydraulique (152), au moins une partie dudit premier fluide étant située entre lesdits seconds sites d'étanchéité intérieur (114) et extérieur (116) et entre lesdits sites d'équilibrage intérieur (18) et extérieur (20), lesdits sites d'équilibrage intérieur et extérieur étant chacun situés entre et exposés auxdits premier et second fluides et chacun rendant étanche ledit premier fluide dudit second fluide.

6. Ensemble d'étanchéité selon l'une quelconque des revendications précédentes, dans lequel ladite première extrémité de bague (36) et ladite seconde extrémité de bague (38) sont des surfaces sensiblement planes, et ladite première extrémité de bague est sensiblement parallèle à ladite seconde extrémité de bague.

7. Ensemble d'étanchéité selon l'une quelconque des revendications précédentes, dans lequel ledit élément de retenue fournit un alésage à bride (68) de forme annulaire généralement situé radialement vers l'extérieur de, en relation espacée vis-à-vis de, et entourant une partie de ladite surface d'étanchéité dudit arbre ; et
ledit joint dynamique est situé au moins partiellement à l'intérieur dudit alésage à bride, ledit joint dynamique ayant une surface d'étanchéité statique maintenue en contact d'étanchéité avec ledit alésage à bride dudit élément de retenue.

8. Ensemble d'étanchéité selon l'une quelconque des revendications précédentes, dans lequel ladite bague d'appui a une longueur axiale entre lesdites première (36) et seconde (38) extrémités de bague, et toute ladite longueur axiale est située axialement entre ledit joint dynamique et ledit épaulement de positionnement, aucune partie dudit joint dynamique n'est située axialement entre lesdites première et seconde extrémités de bague, aucune partie de ladite bague d'appui n'entoure ledit joint dynamique et aucune partie de ladite bague d'appui n'est située radialement entre ledit joint dynamique et ledit élément de retenu, au moine une partie dudit joint dynamique est située à l'intérieur dudit élément de retenue.

9. Ensemble d'étanchéité selon l'une quelconque des revendications 1 à 4, dans lequel ladite bague d'appui comprend un passage de pression (88') de ladite première extrémité de bague vers ladite seconde extrémité de bague, ledit passage de pression contenant et communiquant ledit premier fluide et ladite pression dudit premier fluide à ladite seconde zone hydraulique, au moins une partie dudit premier fluide étant située entre lesdits seconds sites d'étanchéité intérieur (114) et extérieur (116) et entre lesdits joints d'équilibrage intérieur et extérieur, lesdits joints d'équilibrage intérieur et extérieur étant chacun situés entre et exposés auxdits premier et second fluides et chacun rendant étanche ledit premier fluide dudit second fluide.

10. Ensemble d'étanchéité selon l'une quelconque des revendications 1 à 4 et 9, dans lequel ledit premier site d'étanchéité extérieur (112) est formé par un joint facial en contact étanche avec ledit élément de retenue et ladite bague d'appui, ladite bague d'appui fournissant un alésage à bride (68) situé en relation espacée avec ladite surface d'étanchéité de l'arbre et ayant un contact étanche avec et entourant au moins une partie dudit joint dynamique.

11. Ensemble d'étanchéité selon l'une quelconque des revendications 1 à 8, dans lequel ledit élément de retenue comprend une paroi de bride (70) qui est adjacente audit joint dynamique et faisant généralement face audit joint dynamique, et faisant généralement face à ladite première extrémité de bague et ledit épaulement de positionnement, ledit joint dynamique étant situé entre ladite paroi de bride et ladite première extrémité de bague, et ladite bague d'appui étant située entre ledit joint dynamique et ledit épaulement de positionnement.

12. Ensemble d'étanchéité selon l'une quelconque des revendications 1 à 4, dans lequel ledit boîtier de cloison (16) comprenant un passage de pression (88) contenant ledit premier fluide et ladite pression dudit premier fluide et ayant une ouverture située entre lesdits joints d'équilibrage intérieur et extérieur et faisant face à ladite bague d'appui.

13. Ensemble d'étanchéité selon la revendication 12, dans lequel ledit passage de pression (88) est un trou perforé et ledit élément de retenue a un trou de communication de fluide généralement orienté axialement situé radialement vers l'extérieur dudit premier site d'étanchéité extérieur et ledit trou de communication de fluide communiquant ledit premier fluide vers ledit trou perforé.

14. Ensemble d'étanchéité selon l'une quelconque des revendications 1 à 8, dans lequel aucune partie dudit joint dynamique (10) n'est à l'intérieur d'aucune partie de ladite bague d'appui (12).
